# EUROPEAN PATENT APPLICATION

(11) **EP 4 797 105 A2**
(43) Date of publication of application: **26.08.2026**
(21) Application number: 25224385.2
(22) Date of filing: 17.12.2025
(51) Int. Cl.: G06F 12/084, G06F 12/14

(54) **SIDE-CHANNEL PROTECTION CACHE LINES SHARED BY SECURITY DOMAINS**

(30) Priority: 21.02.2025 US 202519060590
(71) Applicant: Intel Corporation, Santa Clara, CA 95054 (US)
(72) Inventor: Rozas, Carlos, Portland OR, 97229 (US); Pokam, Gilles, Livermore CA, 94550 (US); Liu, Fangfei, Hillsboro OR, 97124 (US); Constable, Scott, Portland OR, 97229 (US); Makaram, Raghunandan, Northborough MA, 01532 (US); Unterluggauer, Thomas, 9580 Villach (AT)
(74) Representative: Samson & Partner Patentanwälte mbB

(57) **Abstract**

A processor or other apparatus of an aspect includes a cache to store cache lines and a circuitry coupled with the cache. The circuitry is to receive a memory access request for data at a memory address from a first security domain. The data at the memory address is to be shared by a plurality of security domains including the first security domain. A side-channel protection is to be used for the data. The circuitry is to implement the side-channel protection for the data. This includes not providing a cache line corresponding to the memory address from the cache to the first security domain, when the cache line exists in the cache and is valid, if the first security domain has not previously accessed the cache line in the cache. Other processors, methods, systems, and instructions are disclosed.

## Description

### BACKGROUND

### Technical Field

Embodiments described herein generally relate to caches. In particular, embodiments described herein generally relate to security of caches.

### Background Information

A commercial processor often includes at least one cache. The cache may represent a relatively small and relatively fast access local storage that is closer to the cores and/or execution pipeline of the processor than system memory. During operation the cache may be used to cache or store data that has been loaded into the processor from the system memory. Subsequently, when the processor wants to read the data from the system memory, or write the data to the system memory, the processor may first check to see if the data is stored in the cache. If the data is stored in the cache, then the processor may access the data relatively quickly from the cache, instead of needing to perform a slower access to the data in the system memory. As a result, including at least one cache in the processor may help to reduce the average amount of time needed to retrieve data into the processor, which in turn may help to improve the performance of the processor.

One challenge is that the cache may be a possible source of information leakage during a side-channel attack. Through such an attack an attacker may be able to infer sensitive or confidential data (e.g., cryptographic keys, passwords, etc.). One class of cache-based side-channel attacks is based on shared memory. Specifically, sharing memory between distrusting entities may provide an attacker with a relatively low-noise signal about the cache usage of other untrusted entities (e.g., about the memory access patterns of code shared through VM images or shared libraries, etc.). By way of example, this may be based on the attacker examining cache hit and/or cache miss information on cache lines shared through the shared memory. Examples of such cache-based side-channel attacks based on shared memory include Flush+Reload, Flush+Flush, and Evict+Reload.

One possible way to help reduce the risks of such cache-based side-channel attacks based on shared memory is to not share memory between untrusting entities. However, not sharing memory between untrusting entities tends to increase memory consumption. By way of example, in the case of the untrusted entities being different VM instances, the image of every VM instance may be stored in system memory. With such an approach, even though at least a large proportion of the VM base images are often very uniform, every VM instance may have its own respective image copy in system memory, since memory is not shared between the untrusting VMs to help reduce the risks of such cache-based side-channel attacks based on shared memory. A drawback with such an approach is increased memory consumption. This may be especially the case in servers, data centers, and cloud computing environments where there may be many such VM instances or other entities.

### BRIEF DESCRIPTION OF THE DRAWINGS

Various examples in accordance with the present disclosure will be described with reference to the drawings, in which:
**FIG. 1** is a block flow diagram of an embodiment of a method of implementing a side-channel protection for data.
**FIG. 2** is a block diagram of an embodiment of a processor or other apparatus that is operative to implement a side-channel protection for data.
**FIG. 3** is a block diagram of an example embodiment of a cache line.
**FIG. 4** is a block diagram of a first example embodiment of an N-way set associative cache.
**FIG. 5** is a block diagram of a second example embodiment of an N-way set associative cache.
**FIG. 6** is a block diagram of a system including an embodiment of a processor coupled with a memory.
**FIG. 7** is a block flow diagram of a detailed example embodiment of a method involving side-channel protection.
**FIG. 8** is a block flow diagram of an embodiment of a method that may be performed by a VMM to implement a side-channel protection.
**FIG. 9** is a block diagram of an embodiment of a processor to perform a cache line flush instruction.
**FIG. 10** illustrates an example computing system.
**FIG. 11** illustrates a block diagram of an example processor and/or System on a Chip (SoC) that may have one or more cores and an integrated memory controller.
**FIG. 12(A)** is a block diagram illustrating both an example in-order pipeline and an example register renaming, out-of-order issue/execution pipeline according to examples.
**FIG. 12(B)** is a block diagram illustrating both an example in-order architecture core and an example register renaming, out-of-order issue/execution architecture core to be included in a processor according to examples.
**FIG. 13** illustrates examples of execution unit(s) circuitry.
**FIG. 14** is a block diagram of a register architecture according to some examples.
**FIG. 15** illustrates examples of an instruction format.
**FIG. 16** illustrates examples of an addressing information field.
**FIG. 17** illustrates examples of a first prefix.
**FIGS. 18(A)****-(D)** illustrate examples of how the R, X, and B fields of the first prefix in **FIG. 17** are used.
**FIGS. 19(A)****-(B)** illustrate examples of a second prefix.
**FIG. 20** illustrates examples of a third prefix.
**FIG. 21** is a block diagram illustrating the use of a software instruction converter to convert binary instructions in a source instruction set architecture to binary instructions in a target instruction set architecture according to examples.

### DETAILED DESCRIPTION OF EMBODIMENTS

The present disclosure relates to methods, apparatus, systems, and non-transitory computer-readable storage media to provide side-channel protection for cache lines shared by security domains. In the following description, numerous specific details are set forth (e.g., sequences of operations, processor configurations, instruction operations, microarchitectural details, etc.). However, embodiments may be practiced without these specific details. In other instances, well-known circuits, structures, and techniques have not been shown in detail to avoid obscuring the understanding of the description.

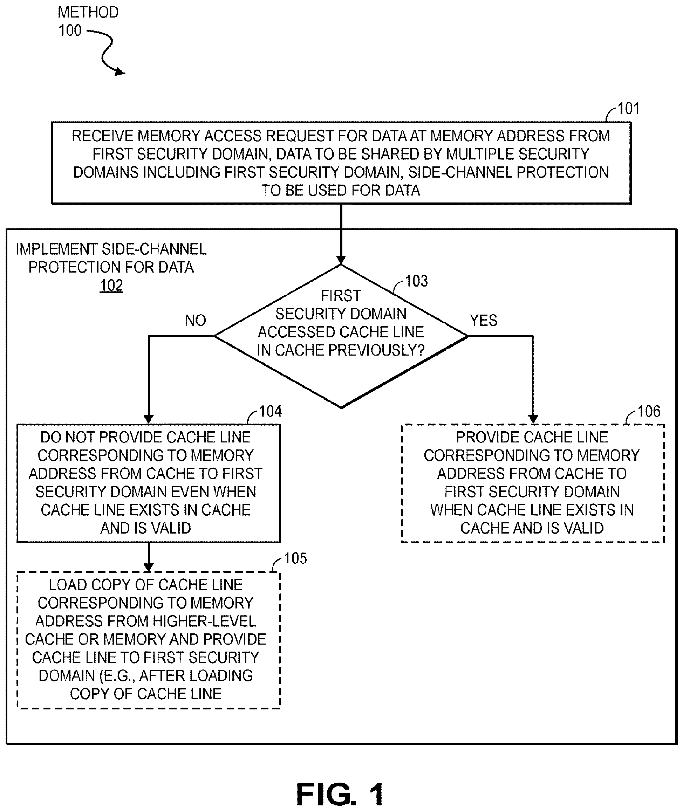

**FIG. 1** is a block flow diagram of an embodiment of a method 100 of implementing a side-channel protection for data. In various embodiments, the method may be performed by a processor or other integrated circuit (e.g., a general-purpose processor or a special purpose processor) or a portion thereof (e.g., a cache controller, a snoop filter, cache directory, or circuitry used to control and/or manage a cache).

At block 101, a memory access request may be received for data at a memory address from a first security domain. In some embodiments, the memory access request may optionally be augmented with or otherwise include an identifier of the first security domain. The data at the memory address may be shared by a plurality of security domains including the first security domain. Examples of suitable types of security domains include, but are not limited to, virtual machines (VMs), protected VMs (e.g., that do not trust and/or whose contents are protected from a virtual machine monitor (VMM)), trusted execution environments (TEEs), secure enclaves or other protected applications (e.g., which need not necessarily be in a VM), and the like. One specific example of a suitable security domain is a trust domain in Intel^{®} Trust Domain Extensions (Intel^{®} TDX). Another specific example of a suitable security domain is a Secure Encrypted Virtualization Secure Nested Paging (SEV-SNP) virtual machine in AMD SEV-SNP. Yet another example of a suitable security domain is a realm in ARMs realm management extension (RME).

A side-channel protection may be used to help protect or secure the data. The fact that the side-channel protection is used for the data may be reflected in different ways in different embodiments. In some embodiments, a first-level address translation page table or a second-level address translation page table (e.g., an extended page table) may include a page table entry including a translation associated with the memory address that indicates that the data (e.g., a page containing the data) is to use the side-channel protection. Such an indication may also be included in an associated page table entry of a translation lookaside buffer (TLB). In some embodiments, the memory access request may optionally be augmented with or otherwise include an indication that the side-channel protection is to be used for the data and/or the memory address.

At block 102, the side-channel protection is implemented for the data. At block 103, this includes determining whether the first security domain has previously accessed a matching cache line (e.g., having or otherwise corresponding to the data) in the cache. The matching cache line may be a cache line corresponding to the memory address (e.g., having a tag matching and/or selected by the memory address). By way of example, the first security domain may have previously accessed the cache line in the cache if the first security domain either loaded the cache line into the cache and/or has accessed the cache line in the cache after other software (e.g., another domain) loaded the cache line into the cache. Flushes or other removal of the cache line from the cache may clear or reset the indication of whether the first security domain has accessed the cache line in the cache (e.g., if the first security domain accesses a given cache line at a first time, then that given cache line is flushed from the cache, then that given cache line is reloaded into the cache by a different domain, and then the first security domain accesses the given cache line at a second time, then at the second time the first security domain would not be considered to have previously accessed the given cache line in the cache).

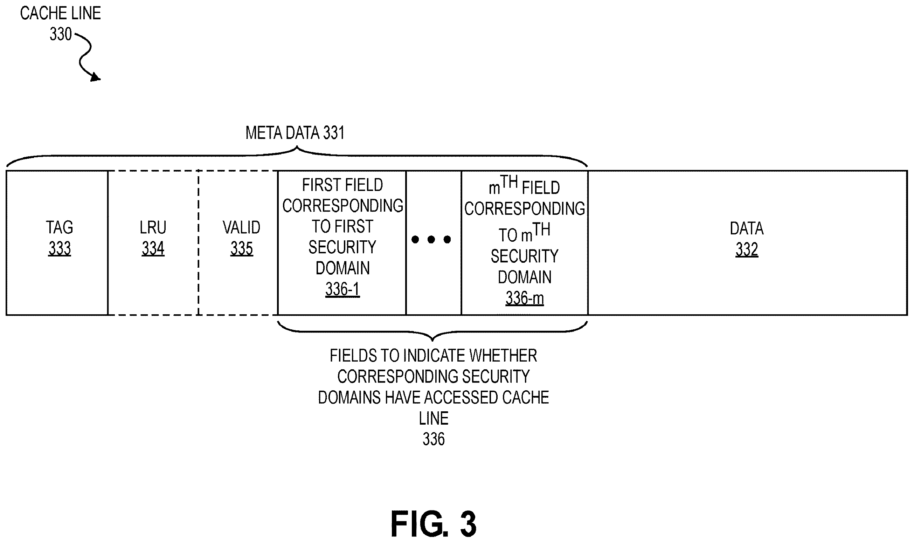

In some embodiments, metadata may be maintained about the cache line to record whether or not the first security domain has previously accessed the cache line in the cache. One example of such metadata is per-security domain fields in the cache line or associated with the cache line to record on a per-security domain basis whether the corresponding security domains have previously accessed the cache line in the cache. These per-security domain fields will be discussed further below in conjunction with **FIGS. 3-5****.** Other types of metadata that are able to record whether or not the security domains have previously accessed the cache line in the cache may also be used.

If the first security domain has not previously accessed the cache line in the cache (e.g., "no" is the determination at block 103), then the method may advance to block 104. At block 104, implementing the side-channel protection includes not providing the cache line corresponding to the memory address from the cache to the first security domain, even when the cache line exists in the cache and is valid (e.g., as indicated by a corresponding valid bit or field defined by a cache coherency protocol (e.g., MESI, MOSI, MOESI, etc.)). This may effectively represent forcing a false "cache miss" in the cache. Not providing the cache line may help to reduce the risk of an attacker being able to use a side-channel to learn that the cache line exists in the cache even though it was not previously accessed by the first security domain (e.g., that it was loaded into the cache by another security domain sharing the cache line). Note that this is based on access by security domains (e.g., VMs, protected VMs, etc.) not based on cores (e.g., which may alternate between supporting different security domains). The alternative of tracking based on cores may tend to hinder a highly multi-threaded workload from benefitting from cache lines loaded into the cache by other cores.

At block 105, implementing the side-channel protection for the data may optionally include loading a copy of the cache line corresponding to the memory address from a higher-level cache (e.g., a system cache) or from memory, and providing the cache line (e.g., either the cache line existing in the cache or the loaded copy of the cache line) to the first security domain. Commonly, the cache line may be provided to the first security domain after the copy of the cache line has been loaded from memory so that the timing of providing the cache line to the first security domain is consistent with the copy of the cache line being loaded from memory. Note that the loading of the cache line may be performed even when the cache line already exists in the cache and is valid. The load of the cache line may be performed in part to provide the false appearance that the cache line does not exist in the cache, which may help to avoid an attacker using a side-channel to learn that the cache line exists in the cache and/or had been previously loaded into the cache by another security domain sharing the cache line. In some embodiments, a field of the cache line corresponding to the first security domain, or other metadata, may optionally be changed and/or updated to indicate that the first security domain, in loading the copy of the cache line, has now accessed the cache line in the cache.

Referring again to block 103, if the first security domain has previously accessed the cache line in the cache (e.g., "yes" is the determination at block 103), then the method may optionally advance to block 106. At block 106, implementing the side-channel protection for the data may optionally include providing the cache line corresponding to the memory address from the cache to the first security domain, when the cache line in the cache is valid. Since the first security domain has previously accessed the cache line in the cache it is safe to have a cache hit without revealing through side channels that another domain or security domain had brought the cache line into the cache.

The side-channel protection may help to allow cache lines or data to be more securely shared between security domains with less risk of secret or confidential data being revealed through cache-based side-channel attacks. The side-channel protection may help to make it harder for attackers to use side-channel information (e.g., cache hit and/or cache miss information for shared cache lines) to infer memory access patterns on shared memory cache lines and/or to obtain secret or confidential information. As one possible use case, in the case of the untrusting security domains being different VM instances, instead of disabling the sharing of memory and needing to store entire separate or replicate images of every VM instance in system memory, parts of VM images (e.g., read-only code/data of at least part of a VM OS image) may be shared by multiple VM instances and/or containers. This may help to reduce the amount of memory needed to store all of the VM instances, which may help to reduce implementation costs. Alternatively, cache lines may be shared between untrusting security domains for other purposes.

It is to be appreciated that different embodiments may use different amounts of side-channel protection. For example, the optional operations or aspects described herein may either be used to provide additional side-channel protection or may optionally be omitted to not provide such additional side-channel protection. Although there are potential advantages to using multiple or many of these optional operations or aspects, even using the minimum amount of side-channel protection is useful and may be sufficient for some implementations. There is a trade-off between providing more side-channel protection and providing a simpler implementation that may differ from one implementation to another.

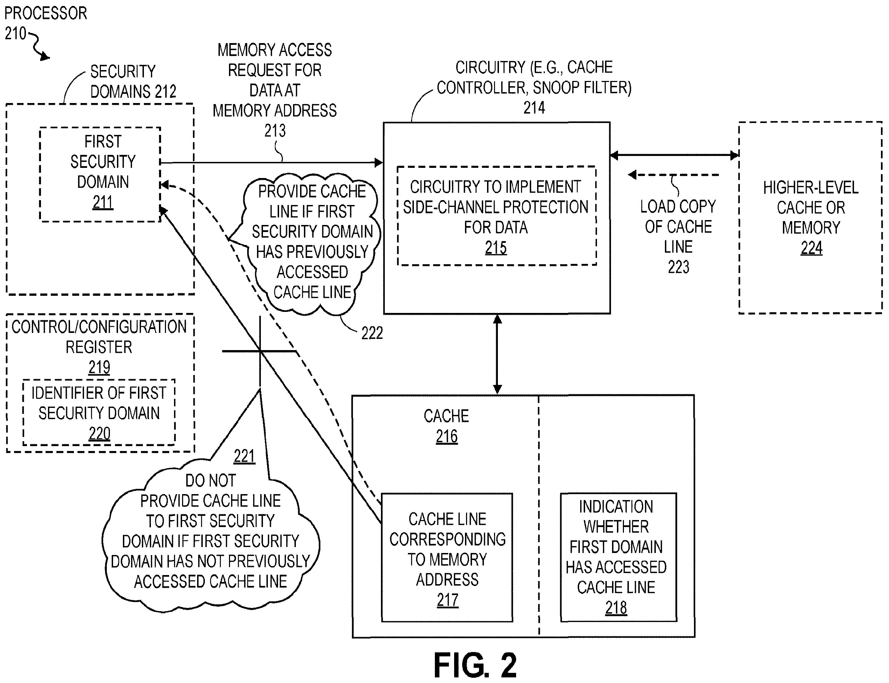

**FIG. 2** is a block diagram of an embodiment of a processor 210 or other apparatus that is operative to implement a side-channel protection for data. In some embodiments, the processor 210 may be operative to perform the method 100 of **FIG. 1****.** The components, features, and details described herein for the processor 210 may also optionally apply to the method 100. Alternatively, the method 100 may be performed by and/or within a similar or different processor or other apparatus. Moreover, the processor 210 may perform methods similar to or different than the method 100.

In some embodiments, the processor may be a general-purpose processor (e.g., a general-purpose microprocessor or central processing unit (CPU) of the type used in servers, desktops, laptops, or other computer systems). Alternatively, the processor may be a special-purpose processor. Examples of suitable special-purpose processors include, but are not limited to, graphics processors, machine-learning processors, artificial intelligence processors, digital signal processors (DSPs), co-processors, and embedded processors, to name a few examples. In some embodiments, the processor may include (e.g., be disposed on) at least one integrated circuit or semiconductor die. In some embodiments, the processor may include at least some hardware (e.g., transistors, capacitors, circuitry, non-volatile memory storing circuit-level instructions/control signals, or the like).

The processor includes a cache 216. In some embodiments, the cache may be a shared cache, such as, for example, a level 2 (L2) cache, a level 3 (L3) cache, a system cache, or the like. The cache may be operative to store cache lines, including a cache line 217. The processor also includes circuitry 214 coupled with the cache. In various embodiments, the circuitry 214 may be a cache controller or cache controller circuitry, a snoop filter or snoop filter circuitry, cache directory or cache directory circuitry, circuitry used to control and/or manage a cache, circuitry to implement side-channel protections for cache, or the like.

During operation, the circuitry 214 may receive a memory access request 213 for data at a memory address from a first security domain 211. In some embodiments, the memory access request may optionally be augmented with or otherwise include an identifier of the first security domain. In some embodiments, the processor may optionally include a per-core or per-hardware thread control and/or configuration register 219 (e.g., a model specific register (MSR)) to record or otherwise store the identifier 220 of the first security domain when the first security domain is active and executing instructions on the processor. The control and/or configuration register may either be a newly introduced register or may be an existing register to which a new field is added or one or more existing fields are repurposed to this new meaning. The data at the memory address (e.g., the cache line 217 having the data) may be shared by multiple security domains 212 including the first security domain. The previously described types of security domains are suitable (e.g., VMs, protected VMs, TEEs, trust domains, SEV-SNP VMs, realms, secure enclaves, etc.)

The circuitry may determine and/or recognize that a side-channel protection as described elsewhere is to be used for the data. The fact that the side-channel protection is to be used for the data may be reflected in different ways in different embodiments. In some embodiments, a first-level address translation page table or a second-level address translation page table (e.g., an extended page table) may include a page table entry including a translation associated with the memory address that indicates that a page containing the data is to use the side-channel protection. In some embodiments, such an indication may be included in a TLB used to cache or otherwise store the page table entry. In some embodiments, the memory access request may optionally be augmented with or otherwise include an indication that the side-channel protection is to be used for the data and/or the memory address.

The circuitry 214 may implement the side-channel protection for the data. In some embodiments, the circuitry (e.g., a cache controller, snoop filter, etc.) may include circuitry 215 or other logic to implement the side-channel protection for the data. Implementing the side-channel protection for the data may include determining whether the first security domain has previously accessed a matching cache line 217 (e.g., that has or otherwise corresponds to the data) in the cache. The matching cache line may be a cache line corresponding to the memory address (e.g., having a tag matching and/or selected by the memory address). By way of example, the first security domain may have previously accessed the cache line in the cache if the first security domain either previously loaded the cache line into the cache and/or has accessed the cache line in the cache after other software (e.g., another domain) loaded the cache line into the cache.

In some embodiments, metadata may be maintained about the cache line to record whether the first security domain has previously accessed the cache line in the cache. As shown, an indication 218 may be maintained indicating whether the first security domain has accessed the cache line. In some cases, this indication may be part of the cache (e.g., part of the cache line). In other cases, this indication may be separate from the cache but associated with the cache (e.g., associated with the cache line 217). One specific example of the indication or other such metadata is a field (e.g., one or more bit positions) in the cache line corresponding to the first security domain to indicate whether the first security domain has previously accessed the cache line 217 in the cache. Further details of such a field will be discussed further below in conjunction with **FIGS.** 3-5. Alternatively, other types of metadata that are able to record whether or not the security domains have previously accessed the cache line in the cache may optionally be used instead.

As shown at cloud 221, implementing the side-channel protection for the data may include not providing the cache line corresponding to the memory address from the cache to the first security domain, even when the cache line exists in the cache and is valid (e.g., as indicated by a corresponding valid bit or field defined by a cache coherency protocol), if the first security domain has not previously accessed the cache line in the cache. This may effectively represent forcing a false "cache miss" in the cache. Not providing the cache line may help to reduce the risk of an attacker being able to use a side-channel to learn that the cache line exists in the cache even though it was not previously accessed by the first security domain (e.g., that it was loaded into the cache by another security domain sharing the cache line).

In some embodiments, the circuitry 214, in implementing the side-channel protection for the data, may optionally load 223 a copy of the cache line corresponding to the memory address from a higher-level cache (e.g., a system cache) or from memory 224. The circuitry may also provide the cache line (e.g., either the cache line that previously existed in the cache or the loaded copy of the cache line) to the first security domain. Commonly, the cache line may be provided to the first security domain after the copy of the cache line has been loaded from memory so that the timing of providing the cache line to the first security domain is consistent with the copy of the cache line being loaded from memory. Note that the loading of the cache line may be performed even when the cache line already exists in the cache and is valid. The load of the cache line may be performed in part to provide the false appearance that the cache line does not exist in the cache, which may help to avoid an attacker using a side-channel to learn that the cache line exists in the cache and/or had been previously loaded into the cache by another security domain sharing the cache line. In some embodiments, the circuitry 214 may optionally change and/or update a field of the cache line corresponding to the first security domain, or other metadata, to indicate that the first security domain, in loading the copy of the cache line, has now accessed the cache line in the cache.

In some embodiments, when the cache line exists in the cache and is valid, but the first security domain has not previously accessed the cache line in the cache, the circuitry 214 may optionally perform an additional operation to help prevent an attacker from being able to infer from a missing cache eviction that another security domain had previously loaded the shared cache line into the cache. In some embodiments, this additional operation may optionally be to evict a cache line (e.g., a cache line other than the cache line 217 in the same cache set) in conjunction with loading the copy of the cache line from the higher-level cache or memory. The eviction of this cache line may be performed even though the needed cache line already exists in the cache and so there is no need to evict another cache line to make room for it. Rather, the eviction of this cache line may be performed mainly to avoid the lack of a cache line eviction which may be used by an attacker to infer that the cache line 217 already exists in the cache (e.g., was loaded into the cache by another security domain). The cache line to be evicted may optionally be selected based on a cache line replacement algorithm or policy or may optionally be otherwise selected (e.g., selected at random if desired). As another option, if there is an invalid cache line available, this can also mean to not evict any cache line if the replacement policy prefers allocations in invalid cache line entries.

Alternatively, a cache randomization scheme may optionally be used instead of evicting another cache line. The cache randomization may randomize or pseudo-randomize the locations where a shared cache line is put based on the cache line address to help make it harder for an attacker to exploit cache set contention to infer accesses to the shared cache line. For example, the same memory can be placed in multiple cache sets (e.g., cache lines with the same address tag but different security domain identifiers may be placed in different cache sets to provide cache line aliasing). The cache randomization scheme may help to hide the effects of not evicting a cache line from a randomized cache set when the first security domain has a cache hit but on a shared cache line that it has not previously accessed in the cache. The cache randomization scheme may also help to provide some protection against contention-based cache side channels.

In some embodiments, as shown at cloud 222, the circuitry 214, in implementing the side-channel protection for the data, may optionally provide the cache line corresponding to the memory address from the cache to the first security domain, when the cache line exists in the cache and is valid, if the first security domain has previously accessed the cache line in the cache. Since the first security domain has previously accessed the cache line in the cache it is safe to have a cache hit without revealing through side channels that another domain or security domain had brought the cache line into the cache.

The discussion above immediately above has been for data (e.g., a page having the data) that is to use the side-channel protection (e.g., the memory access request to the data may be made with an indication that the side-channel protection is being used and/or a page table (e.g., a second-level address translation page table) may indicate that a page having the data uses the side-channel protection). In other embodiments, other data (e.g., a page having the other data) may not use the side-channel protection (e.g., a memory access request to the other data may be made without an indication that the side-channel protection is being used and/or a page table (e.g., a second-level address translation page table) may indicate that a different page having the other data does not use the side-channel protection). In some embodiments, special behavior may also be used for such data or pages that are not to use the side-channel protection, since other pages use the side-channel protection. For example, since a page may be mapped in different virtual address spaces (e.g., through different second-level page tables) for different security domains or even the VMM, situations can arise where the same physical page is at one time mapped without the side-channel protection being configured and is at another time mapped with the side-channel protection being configured. As another example, situations may also arise where a physical page was used with side-channel protections configured and its cache line stayed in the cache but is then used differently without the side-channel protections configured, possibly even by the same security domain. Accordingly, in some embodiments, special behavior may also be used for such data or pages that are not to use the side-channel protection, since other pages use the side-channel protection. In some embodiments, the circuitry 214 may receive a second memory access request from the first security domain for second, different data at a second, different memory address. The side-channel protection may not be used for the second data at the second memory address. In some embodiments, for such data on which the side-channel protection is not used, the circuitry 214 may optionally provide a second cache line corresponding to the second memory address from the cache to the first security domain, when the second cache line exists in the cache and is valid, if none of the plurality of security domains have previously accessed the second cache line in the cache. However, in some embodiments, for such data on which the side-channel protection is not used, the circuitry 214 may optionally not provide the second cache line corresponding to the second memory address from the cache to the first security domain, when the second cache line exists in the cache and is valid, if any of the plurality of security domains have previously accessed the second cache line in the cache. This may help to avoid a domain or software other than the security domains 212, such as a VMM, from being able to learn about accesses made by the security domains 212. In such embodiments where the second cache line is not provided, a copy of the second cache line may optionally be loaded from a higher-level cache or from system memory, even when the second cache line exists in the cache and is valid. Once the cache line has been loaded, the cache line (e.g., either the existing second cache line in the cache or the loaded copy of the second cache line) may be provided to the first security domain. In such embodiments where the copy of the second cache line is loaded and then provided to the first security domain, the circuitry 214 may optionally change or update metadata (e.g., per-security domain fields) corresponding to the second cache line to indicate that none of the security domains 212 have accessed the second cache line. This may resemble legacy behavior and help to encourage that software other than one of the security domains 212 (e.g., the VMM) may hit on a cache line that is also used by the security domains.

**FIG. 3** is a block diagram of an example embodiment of a cache line 330. The cache line has data 332 and metadata 331. As shown, the metadata may be part of the cache line. Alternatively, the metadata may optionally be separate from the cache line (e.g., in a separate structure corresponding to the cache line). For clarity, the term data refers broadly to either data to be processed by instructions and/or the instructions themselves (e.g., a cache having the cache line may be a data cache, an instruction cache, or a unified cache having both cache lines of data and cache lines of instructions). The metadata includes a tag field 333, optionally includes a least recently used (LRU) field 334 (or other field to store state for a cache replacement algorithm or policy), and optionally includes a valid field 335 to indicate whether the cache line is valid or not in accordance with a cache coherency protocol.

In some embodiments, the cache line also includes multiple fields 336, each corresponding to a different security domain, to indicate whether the corresponding security domain has previously accessed the cache line 330. These fields represent per-security domain fields to record on a per-security domain basis whether the corresponding security domains have previously accessed the cache line in the cache. As one specific example, each field may be single bit that may have a first value (e.g., be set to binary one according to one possible convention) to indicate that the corresponding security domain has accessed the cache line or a second different value (e.g., be cleared to binary zero according to one possible convention) to indicate that the corresponding security domain has not accessed the cache line. The opposite convention is also possible. In such an example, to support eight security domains may involve adding eight bits to the cache line. The circuitry 214 of **FIG. 2** may change or update these fields 336 when the security domains access the cache line, when the cache line is loaded, when the cache line is flushed, etc. In the illustrated embodiment, the fields include a first field 336-1 corresponding to a first security domain through an Mth field 336-M corresponding to an Mth security domain. In some embodiments, the number of fields M may range from about two to about sixteen, or from about two to about twelve, or from about three to about twelve, or from about three to about ten, or from about four to about ten, or from about four to about ten (e.g., be four, five, six, seven, eight, nine, or ten), although the scope of the invention is not limited to any specific number. For certain implementations, is expected that there is a point of diminishing returns in which adding more fields continues to increase the die size needed to store the fields and continues to increase the power consumption but provides increasingly less benefit in terms of being able to share cache lines between increasing numbers of security domains.

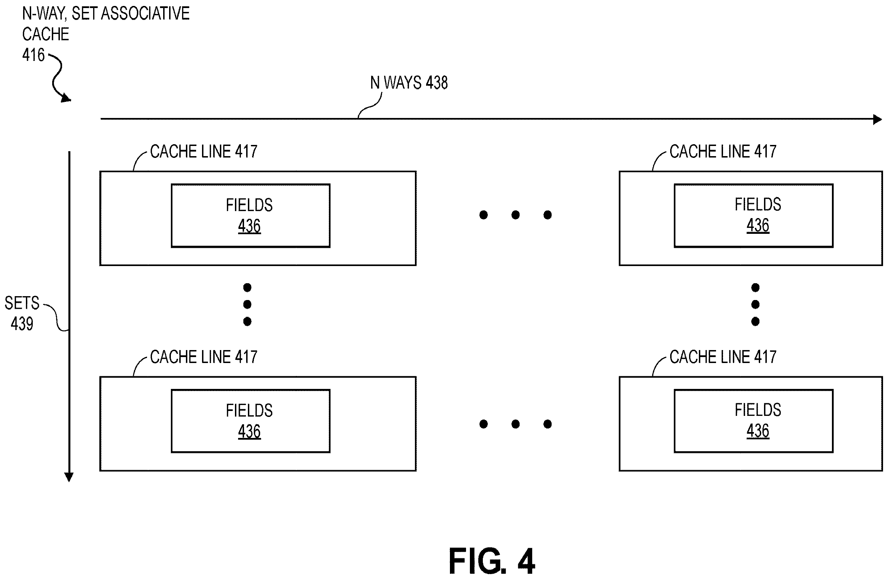

**FIG. 4** is a block diagram of a first example embodiment of an N-way set associative cache 416. The cache has cache lines 417 arranged in sets 439 and N-ways 438 (e.g., 2 ways, 4 ways, 8 ways, etc.). Each memory address may map to a specific set and may map to any one of the N cache lines in that specific set. The cache lines may optionally be similar to or the same as those of **FIG. 3****.** In this embodiment, each of the cache lines in each of the ways and/or each of the cache lines in each of the sets has a corresponding set of fields 436 to indicate whether corresponding security domains have previously accessed the corresponding cache line. In some embodiments, each of the fields 436 may be similar to, or the same as, the fields 336 of **FIG. 3****.**

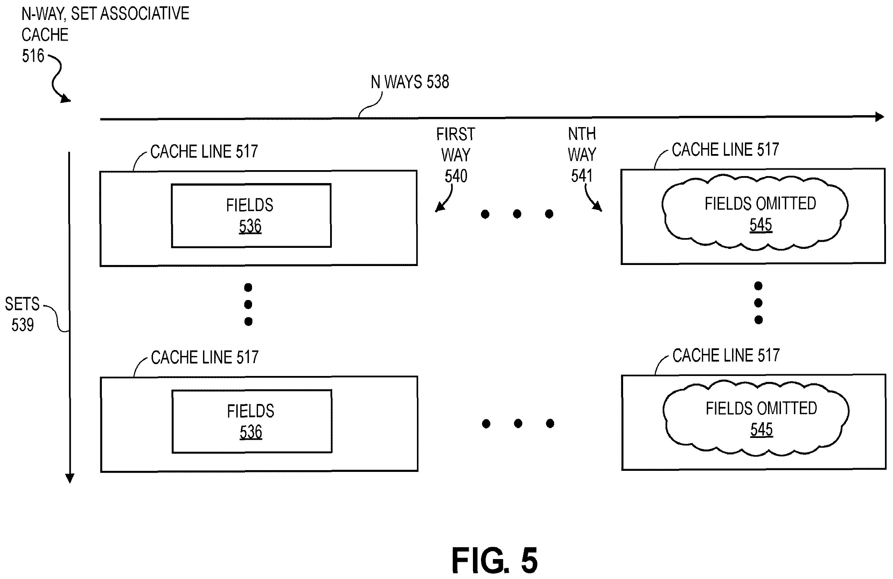

**FIG. 5** is a block diagram of a second example embodiment of an N-way set associative cache 516. As with **FIG. 4****,** the cache has cache lines 517 arranged in sets 539 and N-ways 538. The cache lines may optionally be similar to or the same as those of **FIG. 4****.** However, in this second example embodiment, only a subset of the cache lines in each of the ways, and/or only a subset of the cache lines in each of the sets, has a corresponding set of fields 536 to indicate whether corresponding security domains have previously accessed the cache line. For example, in this specific example embodiment, each of the cache lines in a first way 540 has a corresponding set of fields 536 to indicate whether corresponding security domains have previously accessed the corresponding cache lines 517. However, in this specific example embodiment, as shown by clouds 545, the cache lines in the Nth way 541 optionally omit such fields. Omitting the fields from a subset of the ways may help to reduce die area and/or power consumption. By way of example, even ways may have the fields and odd ways may omit the fields (or the opposite), a lower half or other proportion of the ways may have the fields and a higher half or other proportion of the ways may omit the fields (or the opposite), and so on. The ways having the fields may represent security domain tracking or enlightened ways whereas the ways not having the fields may represent substantially conventional ways.

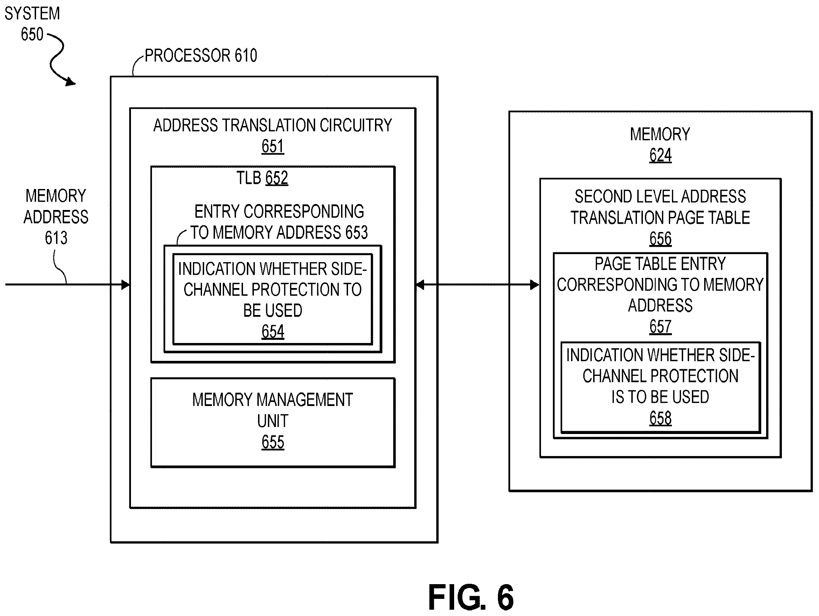

**FIG. 6** is a block diagram of a system including an embodiment of a processor 610 coupled with a memory 624. The processor includes address translation circuitry 651, including a TLB 652 and a memory management unit (MMU) 655. During operation, the address translation circuitry may receive a memory address 613, which may correspond to a memory access request being made by a security domain (e.g., the first security domain 211). The memory stores a second-level address translation page table 656 (e.g., an extended page table). The second-level address translation page table may have page table entries that include translations of guest physical addresses to host physical addresses. The MMU may access the second-level address translation page table and these translations to translate the guest physical addresses to the host physical addresses. Page table entries or other entries having these translations may then be cached or otherwise stored in the TLB 652.

The second-level address translation page table 656 may have a page table entry 657 corresponding to the memory address 613. In some embodiments, the page table entry may include an indication 658 (e.g., a field having one or more bit positions) whether a side-channel protection is to be used for data (e.g., a page having the data) indicated by or otherwise corresponding to the memory address. In some cases, the indication may be a new dedicated field in the page table entry. In other cases, the indication may be provided by a previously unused combination of fields in the page table entry. In an alternate embodiment, such an indication may instead optionally be provided in an entry of a first-level address translation page table. In another alternate embodiment, rather than having the indication 658 in the page table entry 657, the processor may optionally include thread-scope address-range registers to specify a range of memory that is to use the side-channel protection. By way of example, a virtual machine monitor (VMM) may change or update the indication 658 to indicate that the side-channel protection is to be used for the data when it shares the data between mutually distrusting security domains. In some embodiments, the MMU may access the page table entry 657 when the memory address is provided to the address translation circuitry to determine from the indication 658 whether the side-channel protection is to be used for the data. In some embodiments, a page table entry or other entry 653 corresponding to the memory address 613 may be cached or otherwise stored in the TLB. This entry in the TLB may also include an indication 654 whether the side-channel protection is to be used for the data. In some embodiments, the address translation circuitry may check this entry 653 in the TLB when the memory address 613 is provided to the address translation circuitry to determine from the indication 654 whether the side-channel protection is to be used for the data.

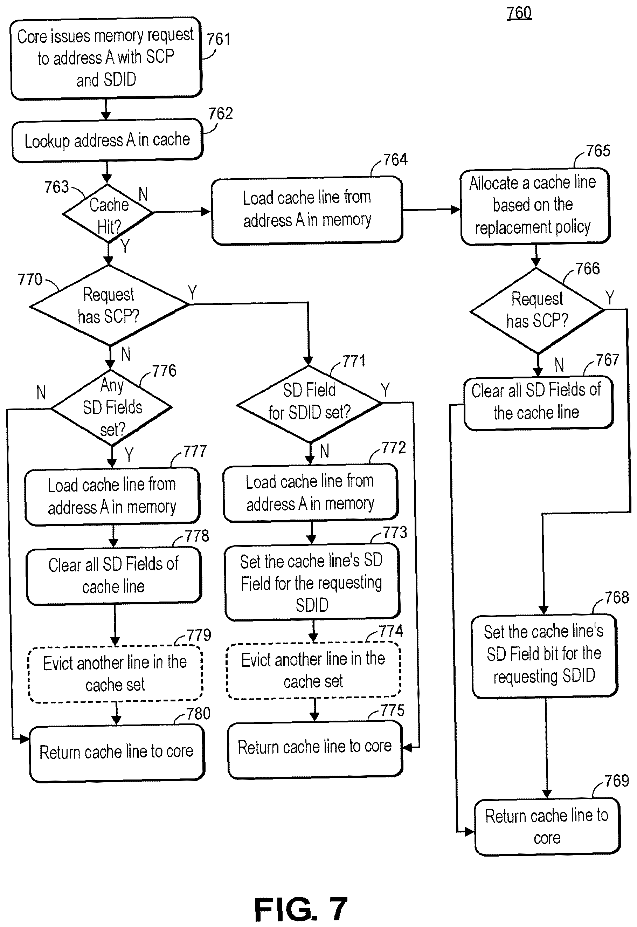

**FIG. 7** is a block flow diagram of a detailed example embodiment of a method 760 of applying a side-channel protection to a memory access request. In some embodiments, the method 760 may be performed by the processor 210 of FIG. 2. The components, features, and details described herein for the processor 210 may also optionally apply to the method 760. Alternatively, the method 760 may be performed by and/or within a similar or different processor or other apparatus. Moreover, the processor 210 may perform methods similar to or different than the method 760.

At block 761, a core issues a memory access request for a given memory address A. In some cases, the memory access request may include an indication that a side channel protection (SCP) is to be used. In some embodiments, whether the SCP is to be used may be specified in a page table (e.g., the page table 656 of FIG. 6) for a page corresponding to the memory access request, as previously described. In some cases, the memory access request may include a security domain identifier (SDID) for a security domain issuing the memory access request. In some embodiments, the SDID may be obtained from a control and/or configuration register (e.g., the register 219 in FIG. 2), as previously described. At block 762, a lookup is performed for the memory address A in a cache. At block 763, a determination is made whether there is a cache hit for the memory address A in the cache.

If there is not a cache hit (e.g., the determination at block 763 is "N"), then at block 764 the cache line is loaded from the memory address A in memory. At block 765, a cache line is allocated in the cache based on a cache line replacement policy or algorithm. At block 766, a determination is made whether the memory access request included an indication that the side channel protection (SCP) is to be used. If the memory access request included the indication that SCP is to be used (e.g., the determination at block 766 is "Y"), then at block 768 the security domain (SD) field (e.g., one of the fields 336 of FIG. 3) for the security domain identified by the SDID is set to indicate that the security domain has accessed the cache line. At block 769, the cache line may be returned to the core (e.g., to the requesting security domain). Referring again to block 766, if the memory access request does not include an indication that SCP is to be used (e.g., the determination at block 766 is "N"), then at block 767 all security domain (SD) fields (e.g., the fields 336 of FIG. 3) for the cache line may be cleared. Then, at block 769, the cache line may be returned to the core (e.g., to the requesting security domain).

Referring again to block 763, if there is a cache hit (e.g., the determination at block 763 is "Y"), then at block 770 a determination may be made whether the memory access request includes an indication that the side channel protection (SCP) is to be used. If the memory access request does include the indication that the SCP is to be used (e.g., the determination at block 770 is "Y"), then the method advances to block 771. At block 771, a determination is made whether the security domain (SD) field corresponding to the SDID is set (e.g., to indicate that the security domain identified by the SDID has previously accessed the cache line in the cache). If the determination at block 771 is yes "Y", then at block 775 the cache line may be returned to the core (e.g., to the requesting security domain). If the determination at block 771 is no "N", then at block 772 the cache line may be loaded from the memory address A in memory. At block 773, the security domain (SD) field corresponding to the security domain identified by the SDID may be set for the cache line. At block 774, another cache line may optionally be evicted from the same cache set as the cache line. This may optionally be omitted if it is not desired to protect against exposing a missing eviction. Then, at block 775, the cache line may be returned to the core (e.g., to the requesting security domain).

Referring again to block 770, if the memory access request does not include the indication that the side channel protection (SCP) is to be used (e.g., the determination at block 770 is "N"), then the method may advance to block 776. At block 776, a determination may be made whether any security domain (SD) fields corresponding to any of the security domains are set (e.g., to indicate that any of the security domains have previously accessed the cache line in the cache). If the determination at block 776 is yes "N", then at block 780 the cache line may be returned to the core (e.g., to the requesting security domain). If the determination at block 776 is yes "Y", then at block 777 the cache line may be loaded from the memory address A in memory. At block 778, all security domain (SD) fields for all security domains may be cleared for the cache line. At block 779, another cache line may optionally be evicted from the same cache set as the cache line. This may optionally be omitted if it is not desired to protect against exposing a missing eviction. Then, at block 780, the cache line may be returned to the core (e.g., to the requesting security domain).

It is to be appreciated that other embodiments pertain to certain portions of the overall method. For example, one embodiment pertains to a flow through blocks 770, 771, 772, 773, 774, and 775. Another embodiment pertains to a flow through blocks 770, 776, 777, 778, 779, and 780. Yet another embodiment pertains to a flow through blocks 763, 764, 765, 766, 768, and 769. These are just a few examples. Other embodiments pertain to other flows through other combinations of two or more of the blocks of FIG. 7.

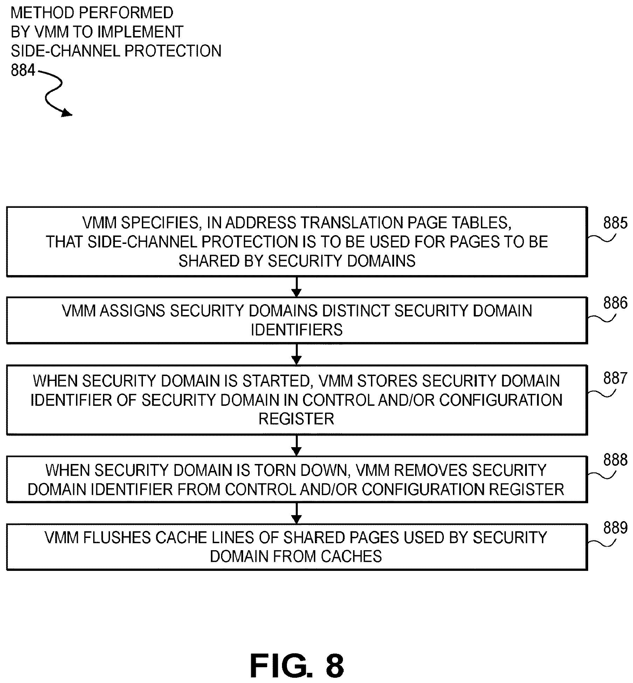

**FIG. 8** is a block flow diagram of an embodiment of a method 884 that may be performed by a VMM to implement a side-channel protection. The VMM is also sometimes referred to as a hypervisor. In some embodiments, the VMM may be implemented as software or instructions that may be stored on a machine-readable storage medium.

At block 885, the VMM or OS may specify, in first-level or second-level address translation page tables, that the side-channel protection is to be used for pages that are to be shared by security domains (e.g., VMs, protected VMs, etc.). In some embodiments, this may include changing or updating indications in the first-level or second-level address translation page tables (e.g., the indication 658 of **FIG. 6****)** to indicate that the pages are to use the side channel protection. The VMM may have previously configured the second-level address translation page tables to allow the pages to be shared (e.g., created mappings from the security domains to those shared pages). In some cases, the security domains may optionally be different VM instances, and the shared pages may optionally be used to store a shared portion of the VM image.

At block 886, the VMM may assign each of the security domains that are to share the pages a distinct security domain identifier. The security domain identifiers may be used by a processor to indicate which security domains memory addresses and/or memory access requests come from.

At block 887, when a security domain is started, the VMM may store the security domain identifier of the security domain being started in a control and/or configuration register (e.g., the register 219 of **FIG. 2****)** for all hardware threads to be used by the security domain being started. In some embodiments, the security domain identifier may be included with memory access requests made by that security domain.

At block 888, when a security domain is torn down, the VMM may remove the security domain identifier from the control and/or configuration register for all hardware threads that had executed the security domain being torn down. The VMM may also remove mappings to the shared pages for the security domain being torn down.

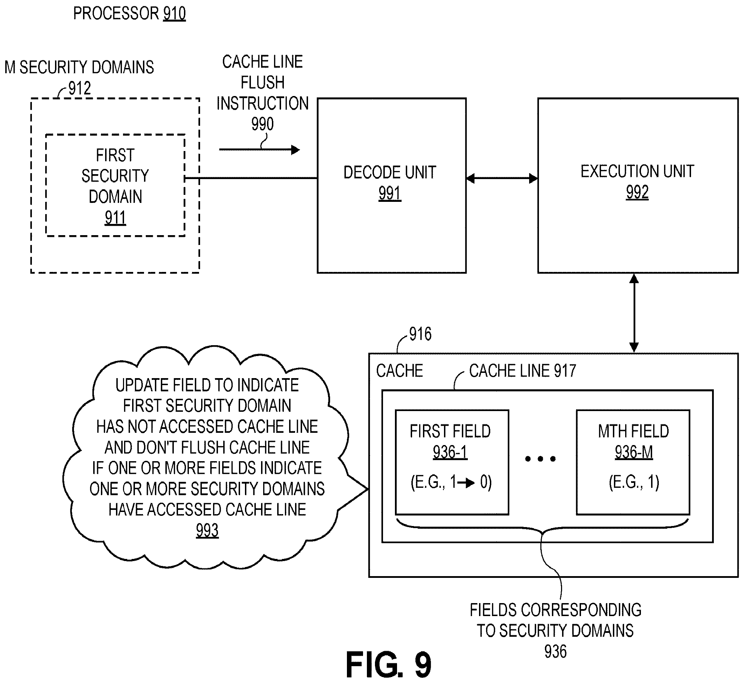

At block 889, the VMM may flush all cache lines of the shared pages used by the security domain from the caches. In some embodiments, this may optionally include the VMM using the cache line flush instruction discussed for **FIG. 9** for these cache lines.

**FIG. 9** is a block diagram of an embodiment of a processor 910 to perform a cache line flush instruction 990. The processor may be of the various types previously described for **FIG. 2** (e.g., general-purpose processor, special-purpose processor, include integrated circuitry, include hardware (e.g., transistors), etc.

The processor includes a decode unit or decoder 991 (e.g., decode circuitry). The decode unit may be coupled to receive the cache line flush instruction from a first security domain 911 of M security domains 912, where the number M may be the numbers previously described (e.g., about two to about sixteen or one of the other ranges mentioned). The cache line flush instruction may represent a macroinstruction, machine code instruction, or other instruction or control signal of an instruction set of the processor. In some embodiments, the cache line flush instruction may explicitly specify (e.g., through one or more fields or a set of bits), or otherwise indicate (e.g., implicitly indicate), a memory address. For example, the cache line flush instruction may have one or more fields to explicitly specify, or may otherwise indicate (e.g., implicitly indicate) one or more registers having memory address generation information that (e.g., potentially along with other information (e.g., information in a segment register)) indicate the memory address. The memory address may be configured (e.g., in page tables) to be shared by the multiple security domains 912. The memory address may indicate data (e.g., of a page of memory) to which a side-channel protection is to be applied.

The decode unit may be operative to decode the cache line flush instruction and may output one or more relatively lower-level instructions or control signals (e.g., one or more microinstructions, micro-operations, micro-code entry points, decoded instructions or control signals, etc.), which reflect, represent, and/or are derived from the relatively higher-level cache line flush instruction. The decode unit and/or instruction recognition and decode logic thereof may be implemented using various instruction decode mechanisms including, but not limited to, microcode read only memories (ROMs), look-up tables, hardware implementations, programmable logic arrays (PLAs), other mechanisms suitable to implement decode units, and combinations thereof. In some embodiments, the decode unit may include at least some hardware (e.g., one or more of transistors, integrated circuitry, on-die read-only memory or other non-volatile memory storing microcode or other hardware-level instructions, etc.). In some embodiments, the decode unit may be included on a die, integrated circuit, or semiconductor substrate.

An execution unit (e.g., execution circuitry) 992 is coupled with the decode unit 991. The execution unit broadly represents the circuitry or other logic to implement the cache line flush instruction. In various embodiments, the execution unit may include circuitry or other logic of, or associated with, a cache controller for a cache 916, a snoop filter for the cache 916, a cache directory for the cache 916, or the like. In some embodiments, the execution unit may be on a die or integrated circuit (e.g., on die or integrated circuit with the decode unit). The execution unit may be coupled to receive the one or more decoded or otherwise converted instructions or control signals that represent and/or are derived from the cache line flush instruction. The execution unit may perform one or more operations corresponding to the cache line flush instruction (e.g., based on one or more instructions or control signals decoded from the instruction and/or based on the instruction being decoded).

In some embodiments, the one or more operations corresponding to the cache line flush instruction may include to update and/or change a field (e.g., first field 936-1) corresponding to a cache line 917 having the data at the memory address and corresponding to the first security domain 911 to indicate that the first security domain 911 has not accessed the cache line 917 in the cache 916, when the first security domain 911 had previously accessed the cache line 917 in the cache 916. In some embodiments, the one or more operations corresponding to the cache line flush instruction may include to flush the cache line 917 from the cache 916 if all fields 936 (e.g., a first field 936-1 through an Mth field 936-M) corresponding to the cache line, and each corresponding to a different one of the security domains 912, indicate that none of the security domains have previously accessed the cache line in the cache. In contrast, in some embodiments, the one or more operations corresponding to the cache line flush instruction may include to not flush the cache line 917 from the cache 916 if the fields 936 (e.g., a first field 936-1 through an Mth field 936-M) indicate that at least one of the security domains has previously accessed the cache line in the cache. In some embodiments, if the memory address instead were to indicate data (e.g., of a page of memory) to which the side-channel protection is not to be applied (e.g., if the data is not shared between security domains), then the one or more operations corresponding to the cache line flush instruction may optionally include to flush the cache line from the cache.

Another potential cache-based risk associated with sharing cache lines is that the state of cache line replacement algorithms or policies (e.g., a Least Recently Used (LRU) state, a pseudo-LRU state, a Quad-Age LRU state, etc.) may potentially reveal information to an attacker. Since the sharing of cache lines between different security domains implies that state of cache line replacement algorithms or policies is also shared between domains, this may tend to expose this additional risk. In some embodiments a cache line replacement policy may optionally be used, which helps to reduce this risk. In some embodiments, when cache lines of all cache ways have fields to indicate whether security domains have accessed the cache lines (e.g., as described for **FIG.** 4), a state of a cache line replacement algorithm or policy (e.g., LRU) may be used along with a randomization aspect to select replacement cache lines. In some embodiments, a replacement cache line may be selected by a method that includes: (1) select an invalid cache line from a target cache set if one exists; (2) if there is no invalid cache line, then select a random cache line from the target cache set; (3) if the randomly selected cache line has previously been accessed by one or more of the security domains (e.g., has at least one bit of the field set according to one possible convention), then the selected cache line is evicted from the cache (e.g., so that the now empty line can be filled with other data); and (4) if the randomly selected cache line has not been previously accessed by any of the security domains (e.g., all bits of the field are cleared according to one possible convention), then from the subset of cache lines in the target set that have not been previously accessed by any of the security domains, select a cache line based on the state of a cache line replacement algorithm or policy (e.g., select a LRU cache line, select a pseudo LRU cache line, select a Quad-Age LRU cache line, etc.) to be evicted from the cache. By way of example, selecting the cache line based on the LRU or the like from among the cache lines that have not been previously accessed by any of the security domains may optionally be implemented by pinning the LRU age of cache lines that have been accessed by one or more of the security domains to more recently or most recently used ages.

In other embodiments, when cache lines in only a subset of all cache ways have fields to indicate whether security domains have accessed the cache lines (e.g., as described for FIG. 5), additional constraints may optionally be incorporated in the selection of cache lines to replace. For example, memory access requests to data for which side channel protection is to be used may only be allocated into the subset of all cache ways having the fields to indicate whether security domains have accessed the cache lines. However, memory access requests to data for which side channel protection is not to be used may be allocated in any of the cache ways, but in some embodiments the replacement policy may optionally emphasize selection of ordinary cache ways lacking the fields. In some embodiments, a replacement cache line may be selected by a method that prevents replacement state to be revealed via shared cache lines that includes: (1) if the memory access request is to data to be protected by a side-channel protection and a cache way having the fields is needed, then: (a) select an invalid cache line from among the cache ways that have the fields; or (b) if no cache lines in the cache ways that have the fields are invalid then select cache line in one of the cache ways that have the fields that has not been previously accessed in the cache by any of the security domains; or else (c) if all cache lines in the cache ways that have the fields have been previously accessed in the cache by one or more of the security domains then select a random cache line in the cache ways that have the fields; or (2) if the memory access request is to data that is not to be protected by a side-channel protection such that the memory access request can allocate in either ordinary cache ways or cache ways that have the fields, then: (a) select an invalid line from any of the cache ways in the target set; or (b) if no invalid cache line is available in the target set then with a low probability (e.g., up to several percent) randomly pick a cache line in one of the cache ways that have the fields for replacement; or else (c) select a cache line based on a state of a cache line replacement algorithm or policy (e.g., LRU, pseudo-LRU, Quad-Age LRU, etc.) from cache lines in the target set that have not been accessed by any of the security domains.

### Example Computer Architectures.

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are suitable.

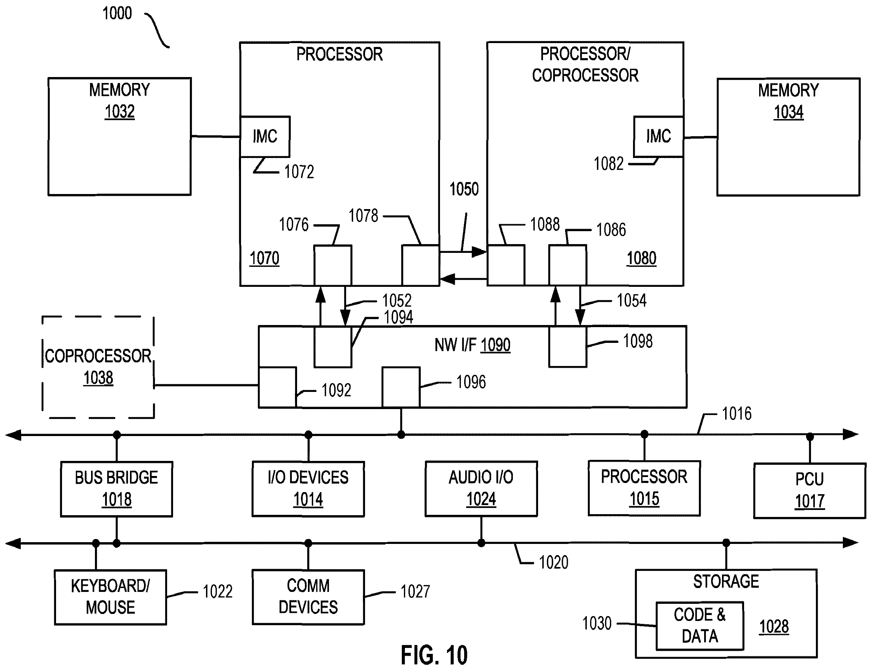

**FIG. 10** illustrates an example computing system. Multiprocessor system 1000 is an interfaced system and includes a plurality of processors or cores including a first processor 1070 and a second processor 1080 coupled via an interface 1050 such as a point-to-point (P-P) interconnect, a fabric, and/or bus. In some examples, the first processor 1070 and the second processor 1080 are homogeneous. In some examples, the first processor 1070 and the second processor 1080 are heterogenous. Though the example system 1000 is shown to have two processors, the system may have three or more processors, or may be a single processor system. In some examples, the computing system is a system on a chip (SoC).

Processors 1070 and 1080 are shown including integrated memory controller (IMC) circuitry 1072 and 1082, respectively. Processor 1070 also includes interface circuits 1076 and 1078; similarly, second processor 1080 includes interface circuits 1086 and 1088. Processors 1070, 1080 may exchange information via the interface 1050 using interface circuits 1078, 1088. IMCs 1072 and 1082 couple the processors 1070, 1080 to respective memories, namely a memory 1032 and a memory 1034, which may be portions of main memory locally attached to the respective processors.

Processors 1070, 1080 may each exchange information with a network interface (NW I/F) 1090 via individual interfaces 1052, 1054 using interface circuits 1076, 1094, 1086, 1098. The network interface 1090 (e.g., one or more of an interconnect, bus, and/or fabric, and in some examples is a chipset) may optionally exchange information with a coprocessor 1038 via an interface circuit 1092. In some examples, the coprocessor 1038 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 1070, 1080 or outside of both processors, yet connected with the processors via an interface such as P-P interconnect, such that either or both processors' local cache information may be stored in the shared cache if a processor is placed into a low power mode.

Network interface 1090 may be coupled to a first interface 1016 via interface circuit 1096. In some examples, the first interface 1016 may be an interface such as a Peripheral Component Interconnect (PCI) interconnect, a PCI Express interconnect or another I/O interconnect. In some examples, the first interface 1016 is coupled to a power control unit (PCU) 1017, which may include circuitry, software, and/or firmware to perform power management operations regarding the processors 1070, 1080 and/or co-processor 1038. PCU 1017 provides control information to a voltage regulator (not shown) to cause the voltage regulator to generate the appropriate regulated voltage. PCU 1017 also provides control information to control the operating voltage generated. In various examples, PCU 1017 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 1017 is illustrated as being present as logic separate from the processor 1070 and/or processor 1080. In other cases, PCU 1017 may execute on a given one or more of cores (not shown) of processor 1070 or 1080. In some cases, PCU 1017 may be implemented as a microcontroller (dedicated or general-purpose) or other control logic configured to execute its own dedicated power management code, sometimes referred to as P-code. In yet other examples, power management operations to be performed by PCU 1017 may be implemented externally to a processor, such as by way of a separate power management integrated circuit (PMIC) or another component external to the processor. In yet other examples, power management operations to be performed by PCU 1017 may be implemented within BIOS or other system software.

Various I/O devices 1014 may be coupled to first interface 1016, along with a bus bridge 1018 which couples first interface 1016 to a second interface 1020. In some examples, one or more additional processor(s) 1015, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 1016. In some examples, the second interface 1020 may be a low pin count (LPC) interface. Various devices may be coupled to second interface 1020 including, for example, a keyboard and/or mouse 1022, communication devices 1027 and storage circuitry 1028. Storage circuitry 1028 may be one or more non-transitory machine-readable storage media as described below, such as a disk drive or other mass storage device which may include instructions/code and data 1030 and may implement the storage 'ISAB03 in some examples. Further, an audio I/O 1024 may be coupled to second interface 1020. Note that other architectures than the point-to-point architecture described above are possible. For example, instead of the point-to-point architecture, a system such as multiprocessor system 1000 may implement a multidrop interface or other such architecture.

### Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

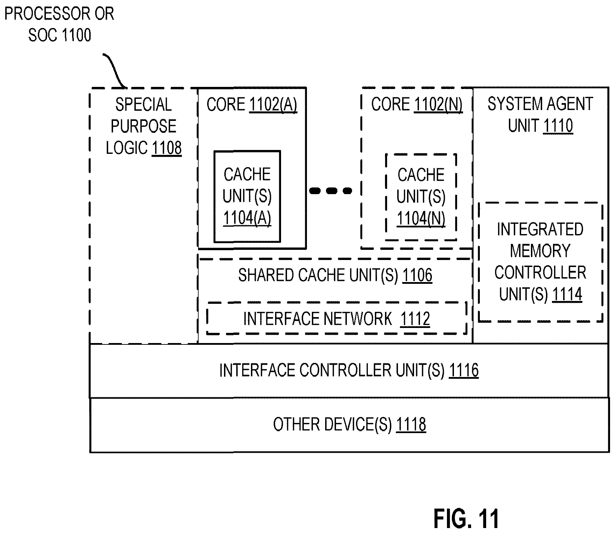

**FIG. 11** illustrates a block diagram of an example processor and/or SoC 1100 that may have one or more cores and an integrated memory controller. The solid lined boxes illustrate a processor 1100 with a single core 1102(A), system agent unit circuitry 1110, and a set of one or more interface controller unit(s) circuitry 1116, while the optional addition of the dashed lined boxes illustrates an alternative processor 1100 with multiple cores 1102(A)-(N), a set of one or more integrated memory controller unit(s) circuitry 1114 in the system agent unit circuitry 1110, and special purpose logic 1108, as well as a set of one or more interface controller units circuitry 1116. Note that the processor 1100 may be one of the processors 1070 or 1080, or co-processor 1038 or 1015 **of** **FIG. 10****.**

Thus, different implementations of the processor 1100 may include: 1) a CPU with the special purpose logic 1108 being integrated graphics and/or scientific (throughput) logic (which may include one or more cores, not shown), and the cores 1102(A)-(N) being one or more general purpose cores (e.g., general purpose in-order cores, general purpose out-of-order cores, or a combination of the two); 2) a coprocessor with the cores 1102(A)-(N) being a large number of special purpose cores intended primarily for graphics and/or scientific (throughput); and 3) a coprocessor with the cores 1102(A)-(N) being a large number of general purpose in-order cores. Thus, the processor 1100 may be a general-purpose processor, coprocessor or special-purpose processor, such as, for example, a network or communication processor, compression engine, graphics processor, GPGPU (general purpose graphics processing unit), a high throughput many integrated core (MIC) coprocessor (including 30 or more cores), embedded processor, or the like. The processor may be implemented on one or more chips. The processor 1100 may be a part of and/or may be implemented on one or more substrates using any of several process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 1104(A)-(N) within the cores 1102(A)-(N), a set of one or more shared cache unit(s) circuitry 1106, and external memory (not shown) coupled to the set of integrated memory controller unit(s) circuitry 1114. The set of one or more shared cache unit(s) circuitry 1106 may include one or more mid-level caches, such as level 2 (L2), level 3 (L3), level 4 (L4), or other levels of cache, such as a last level cache (LLC), and/or combinations thereof. While in some examples interface network circuitry 1112 (e.g., a ring interconnect) interfaces the special purpose logic 1108 (e.g., integrated graphics logic), the set of shared cache unit(s) circuitry 1106, and the system agent unit circuitry 1110, alternative examples use any number of well-known techniques for interfacing such units. In some examples, coherency is maintained between one or more of the shared cache unit(s) circuitry 1106 and cores 1102(A)-(N). In some examples, interface controller units circuitry 1116 couple the cores 1102 to one or more other devices 1118 such as one or more I/O devices, storage, one or more communication devices (e.g., wireless networking, wired networking, etc.), etc.

In some examples, one or more of the cores 1102(A)-(N) are capable of multi-threading. The system agent unit circuitry 1110 includes those components coordinating and operating cores 1102(A)-(N). The system agent unit circuitry 1110 may include, for example, power control unit (PCU) circuitry and/or display unit circuitry (not shown). The PCU may be or may include logic and components needed for regulating the power state of the cores 1102(A)-(N) and/or the special purpose logic 1108 (e.g., integrated graphics logic). The display unit circuitry is for driving one or more externally connected displays.

The cores 1102(A)-(N) may be homogenous in terms of instruction set architecture (ISA). Alternatively, the cores 1102(A)-(N) may be heterogeneous in terms of ISA; that is, a subset of the cores 1102(A)-(N) may be capable of executing an ISA, while other cores may be capable of executing only a subset of that ISA or another ISA.

### Example Core Architectures - In-order and out-of-order core block diagram.

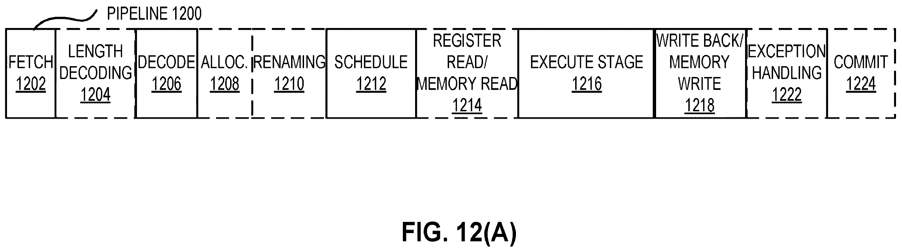

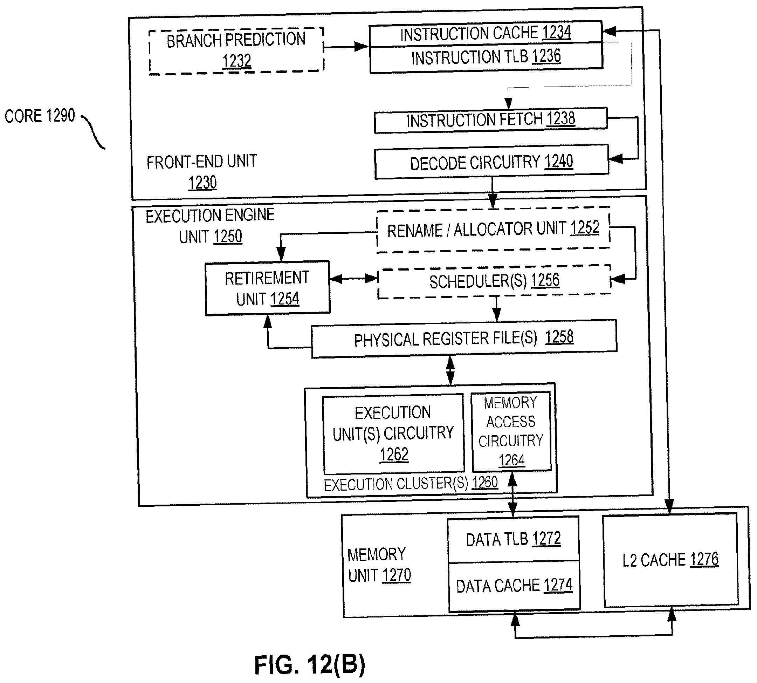

**FIG. 12(A)** is a block diagram illustrating both an example in-order pipeline and an example register renaming, out-of-order issue/execution pipeline according to examples. **FIG. 12(B)** is a block diagram illustrating both an example in-order architecture core and an example register renaming, out-of-order issue/execution architecture core to be included in a processor according to examples. The solid lined boxes in **FIGS. 12(A)****-(B)** illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In **FIG. 12(A)****,** a processor pipeline 1200 includes a fetch stage 1202, an optional length decoding stage 1204, a decode stage 1206, an optional allocation (Alloc) stage 1208, an optional renaming stage 1210, a schedule (also known as a dispatch or issue) stage 1212, an optional register read/memory read stage 1214, an execute stage 1216, a write back/memory write stage 1218, an optional exception handling stage 1222, and an optional commit stage 1224. One or more operations can be performed in each of these processor pipeline stages. For example, during the fetch stage 1202, one or more instructions are fetched from instruction memory, and during the decode stage 1206, the one or more fetched instructions may be decoded, addresses (e.g., load store unit (LSU) addresses) using forwarded register ports may be generated, and branch forwarding (e.g., immediate offset or a link register (LR)) may be performed. In one example, the decode stage 1206 and the register read/memory read stage 1214 may be combined into one pipeline stage. In one example, during the execute stage 1216, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of **FIG. 12(B)** may implement the pipeline 1200 as follows: 1) the instruction fetch circuitry 1238 performs the fetch and length decoding stages 1202 and 1204; 2) the decode circuitry 1240 performs the decode stage 1206; 3) the rename/allocator unit circuitry 1252 performs the allocation stage 1208 and renaming stage 1210; 4) the scheduler(s) circuitry 1256 performs the schedule stage 1212; 5) the physical register file(s) circuitry 1258 and the memory unit circuitry 1270 perform the register read/memory read stage 1214; the execution cluster(s) 1260 perform the execute stage 1216; 6) the memory unit circuitry 1270 and the physical register file(s) circuitry 1258 perform the write back/memory write stage 1218; 7) various circuitry may be involved in the exception handling stage 1222; and 8) the retirement unit circuitry 1254 and the physical register file(s) circuitry 1258 perform the commit stage 1224.

**FIG. 12(B)** shows a processor core 1290 including front-end unit circuitry 1230 coupled to execution engine unit circuitry 1250, and both are coupled to memory unit circuitry 1270. The core 1290 may be a reduced instruction set architecture computing (RISC) core, a complex instruction set architecture computing (CISC) core, a very long instruction word (VLIW) core, or a hybrid or alternative core type. As yet another option, the core 1290 may be a special-purpose core, such as, for example, a network or communication core, compression engine, coprocessor core, general purpose computing graphics processing unit (GPGPU) core, graphics core, or the like.

The front-end unit circuitry 1230 may include branch prediction circuitry 1232 coupled to instruction cache circuitry 1234, which is coupled to an instruction translation lookaside buffer (TLB) 1236, which is coupled to instruction fetch circuitry 1238, which is coupled to decode circuitry 1240. In one example, the instruction cache circuitry 1234 is included in the memory unit circuitry 1270 rather than the front-end circuitry 1230. The decode circuitry 1240 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 1240 may further include address generation unit (AGU, not shown) circuitry. In one example, the AGU generates an LSU address using forwarded register ports, and may further perform branch forwarding (e.g., immediate offset branch forwarding, LR register branch forwarding, etc.). The decode circuitry 1240 may be implemented using various mechanisms. Examples of suitable mechanisms include, but are not limited to, look-up tables, hardware implementations, programmable logic arrays (PLAs), microcode read only memories (ROMs), etc. In one example, the core 1290 includes a microcode ROM (not shown) or other medium that stores microcode for certain macroinstructions (e.g., in decode circuitry 1240 or otherwise within the front-end circuitry 1230). In one example, the decode circuitry 1240 includes a micro-operation (micro-op) or operation cache (not shown) to hold/cache decoded operations, micro-tags, or micro-operations generated during the decode or other stages of the processor pipeline 1200. The decode circuitry 1240 may be coupled to rename/allocator unit circuitry 1252 in the execution engine circuitry 1250.

The execution engine circuitry 1250 includes the rename/allocator unit circuitry 1252 coupled to retirement unit circuitry 1254 and a set of one or more scheduler(s) circuitry 1256. The scheduler(s) circuitry 1256 represents any number of different schedulers, including reservations stations, central instruction window, etc. In some examples, the scheduler(s) circuitry 1256 can include arithmetic logic unit (ALU) scheduler/scheduling circuitry, ALU queues, address generation unit (AGU) scheduler/scheduling circuitry, AGU queues, etc. The scheduler(s) circuitry 1256 is coupled to the physical register file(s) circuitry 1258. Each of the physical register file(s) circuitry 1258 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one example, the physical register file(s) circuitry 1258 includes vector registers unit circuitry, writemask registers unit circuitry, and scalar register unit circuitry. These register units may provide architectural vector registers, vector mask registers, general-purpose registers, etc. The physical register file(s) circuitry 1258 is coupled to the retirement unit circuitry 1254 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 1254 and the physical register file(s) circuitry 1258 are coupled to the execution cluster(s) 1260. The execution cluster(s) 1260 includes a set of one or more execution unit(s) circuitry 1262 and a set of one or more memory access circuitry 1264. The execution unit(s) circuitry 1262 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include several execution units or execution unit circuitry dedicated to specific functions or sets of functions, other examples may include only one execution unit circuitry or multiple execution units/execution unit circuitry that all perform all functions. The scheduler(s) circuitry 1256, physical register file(s) circuitry 1258, and execution cluster(s) 1260 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 1264). It should also be understood that where separate pipelines are used, one or more of these pipelines may be out-of-order issue/execution and the rest in-order.

In some examples, the execution engine unit circuitry 1250 may perform load store unit (LSU) address/data pipelining to an Advanced Microcontroller Bus (AMB) interface (not shown), and address phase and writeback, data phase load, store, and branches.

The set of memory access circuitry 1264 is coupled to the memory unit circuitry 1270, which includes data TLB circuitry 1272 coupled to data cache circuitry 1274 coupled to level 2 (L2) cache circuitry 1276. In one example, the memory access circuitry 1264 may include load unit circuitry, store address unit circuitry, and store data unit circuitry, each of which is coupled to the data TLB circuitry 1272 in the memory unit circuitry 1270. The instruction cache circuitry 1234 is further coupled to the level 2 (L2) cache circuitry 1276 in the memory unit circuitry 1270. In one example, the instruction cache 1234 and the data cache 1274 are combined into a single instruction and data cache (not shown) in L2 cache circuitry 1276, level 3 (L3) cache circuitry (not shown), and/or main memory. The L2 cache circuitry 1276 is coupled to one or more other levels of cache and eventually to a main memory.

The core 1290 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In one example, the core 1290 includes logic to support a packed data instruction set architecture extension (e.g., AVX1, AVX2), thereby allowing the operations used by many multimedia applications to be performed using packed data.

### Example Execution Unit(s) Circuitry.

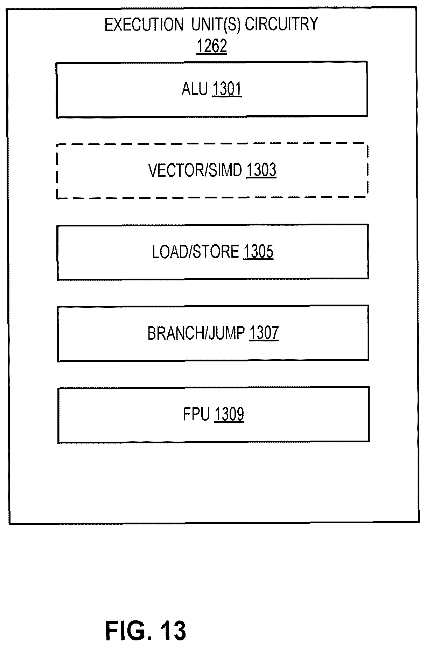

**FIG. 13** illustrates examples of execution unit(s) circuitry, such as execution unit(s) circuitry 1262 of **FIG. 12(B)****.** As illustrated, execution unit(s) circuity 1262 may include one or more ALU circuits 1301, optional vector/single instruction multiple data (SIMD) circuits 1303, load/store circuits 1305, branch/jump circuits 1307, and/or Floating-point unit (FPU) circuits 1309. ALU circuits 1301 perform integer arithmetic and/or Boolean operations. Vector/SIMD circuits 1303 perform vector/SIMD operations on packed data (such as SIMD/vector registers). Load/store circuits 1305 execute load and store instructions to load data from memory into registers or store from registers to memory. Load/store circuits 1305 may also generate addresses. Branch/jump circuits 1307 cause a branch or jump to a memory address depending on the instruction. FPU circuits 1309 perform floating-point arithmetic. The width of the execution unit(s) circuitry 1262 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

### Example Register Architecture.

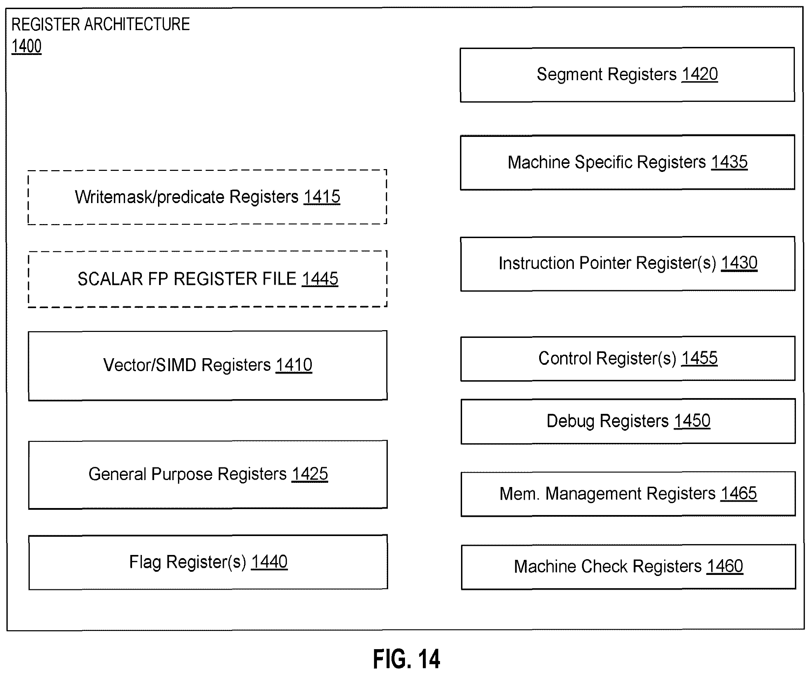

**FIG. 14** is a block diagram of a register architecture 1400 according to some examples. As illustrated, the register architecture 1400 includes vector/SIMD registers 1410 that vary from 128-bit to 1,024 bits width. In some examples, the vector/SIMD registers 1410 are physically 512-bits and, depending upon the mapping, only some of the lower bits are used. For example, in some examples, the vector/SIMD registers 1410 are ZMM registers which are 512 bits: the lower 256 bits are used for YMM registers and the lower 128 bits are used for XMM registers. As such, there is an overlay of registers. In some examples, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the example.

In some examples, the register architecture 1400 includes writemask/predicate registers 1415. For example, in some examples, there are 8 writemask/predicate registers (sometimes called k0 through k7) that are each 16-bit, 32-bit, 64-bit, or 128-bit in size. Writemask/predicate registers 1415 may allow for merging (e.g., allowing any set of elements in the destination to be protected from updates during the execution of any operation) and/or zeroing (e.g., zeroing vector masks allow any set of elements in the destination to be zeroed during the execution of any operation). In some examples, each data element position in a given writemask/predicate register 1415 corresponds to a data element position of the destination. In other examples, the writemask/predicate registers 1415 are scalable and consists of a set number of enable bits for a given vector element (e.g., 8 enable bits per 64-bit vector element).

The register architecture 1400 includes a plurality of general-purpose registers 1425. These registers may be 16-bit, 32-bit, 64-bit, etc. and can be used for scalar operations. In some examples, these registers are referenced by the names RAX, RBX, RCX, RDX, RBP, RSI, RDI, RSP, and R8 through R15.

In some examples, the register architecture 1400 includes scalar floating-point (FP) register file 1445 which is used for scalar floating-point operations on 32/64/80-bit floating-point data using the x87 instruction set architecture extension or as MMX registers to perform operations on 64-bit packed integer data, as well as to hold operands for some operations performed between the MMX and XMM registers.

One or more flag registers 1440 (e.g., EFLAGS, RFLAGS, etc.) store status and control information for arithmetic, compare, and system operations. For example, the one or more flag registers 1440 may store condition code information such as carry, parity, auxiliary carry, zero, sign, and overflow. In some examples, the one or more flag registers 1440 are called program status and control registers.

Segment registers 1420 contain segment points for use in accessing memory. In some examples, these registers are referenced by the names CS, DS, SS, ES, FS, and GS.

Machine specific registers (MSRs) 1435 control and report on processor performance. Most MSRs 1435 handle system-related functions and are not accessible to an application program. Machine check registers 1460 consist of control, status, and error reporting MSRs that are used to detect and report on hardware errors.

One or more instruction pointer register(s) 1430 store an instruction pointer value. Control register(s) 1455 (e.g., CR0-CR4) determine the operating mode of a processor (e.g., processor 1070, 1080, 1038, 1015, and/or 1100) and the characteristics of a currently executing task. Debug registers 1450 control and allow for the monitoring of a processor or core's debugging operations.

Memory (mem) management registers 1465 specify the locations of data structures used in protected mode memory management. These registers may include a global descriptor table register (GDTR), interrupt descriptor table register (IDTR), task register, and a local descriptor table register (LDTR) register.

Alternative examples may use wider or narrower registers. Additionally, alternative examples may use more, less, or different register files and registers. The register architecture 1400 may, for example, be used in register file / memory 'ISAB08, or physical register file(s) circuitry 12 58.

### Instruction set architectures.

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down through the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an example ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands. In addition, though the description below is made in the context of x86 ISA, it is within the knowledge of one skilled in the art to apply the teachings of the present disclosure in another ISA.

### Example Instruction Formats.

Examples of the instruction(s) described herein may be embodied in different formats. Additionally, example systems, architectures, and pipelines are detailed below. Examples of the instruction(s) may be executed on such systems, architectures, and pipelines, but are not limited to those detailed.

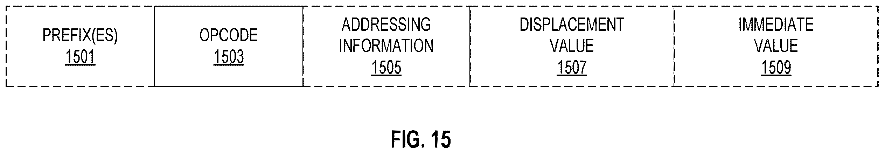

**FIG. 15** illustrates examples of an instruction format. As illustrated, an instruction may include multiple components including, but not limited to, one or more fields for: one or more prefixes 1501, an opcode 1503, addressing information 1505 (e.g., register identifiers, memory addressing information, etc.), a displacement value 1507, and/or an immediate value 1509. Note that some instructions utilize some or all the fields of the format whereas others may only use the field for the opcode 1503. In some examples, the order illustrated is the order in which these fields are to be encoded, however, it should be appreciated that in other examples these fields may be encoded in a different order, combined, etc.

The prefix(es) field(s) 1501, when used, modifies an instruction. In some examples, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 1503 is used to at least partially define the operation to be performed upon a decoding of the instruction. In some examples, a primary opcode encoded in the opcode field 1503 is one, two, or three bytes in length. In other examples, a primary opcode can be a different length. An additional 3-bit opcode field is sometimes encoded in another field.

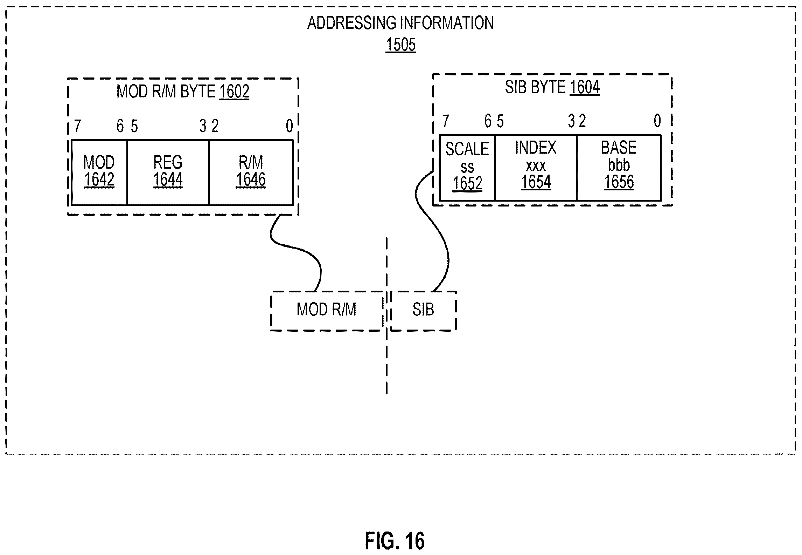

The addressing information field 1505 is used to address one or more operands of the instruction, such as a location in memory or one or more registers. **FIG. 16** illustrates examples of the addressing information field 1505. In this illustration, an optional MOD R/M byte 1602 and an optional Scale, Index, Base (SIB) byte 1604 are shown. The MOD R/M byte 1602 and the SIB byte 1604 are used to encode up to two operands of an instruction, each of which is a direct register or effective memory address. Note that both fields are optional in that not all instructions include one or more of these fields. The MOD R/M byte 1602 includes a MOD field 1642, a register (reg) field 1644, and R/M field 1646.

The content of the MOD field 1642 distinguishes between memory access and non-memory access modes. In some examples, when the MOD field 1642 has a binary value of 11 (11b), a register-direct addressing mode is utilized, and otherwise a register-indirect addressing mode is used.

The register field 1644 may encode either the destination register operand or a source register operand or may encode an opcode extension and not be used to encode any instruction operand. The content of register field 1644, directly or through address generation, specifies the locations of a source or destination operand (either in a register or in memory). In some examples, the register field 1644 is supplemented with an additional bit from a prefix (e.g., prefix 1501) to allow for greater addressing.

The R/M field 1646 may be used to encode an instruction operand that references a memory address or may be used to encode either the destination register operand or a source register operand. Note the R/M field 1646 may be combined with the MOD field 1642 to dictate an addressing mode in some examples.

The SIB byte 1604 includes a scale field 1652, an index field 1654, and a base field 1656 to be used in the generation of an address. The scale field 1652 indicates a scaling factor. The index field 1654 specifies an index register to use. In some examples, the index field 1654 is supplemented with an additional bit from a prefix (e.g., prefix 1501) to allow for greater addressing. The base field 1656 specifies a base register to use. In some examples, the base field 1656 is supplemented with an additional bit from a prefix (e.g., prefix 1501) to allow for greater addressing. In practice, the content of the scale field 1652 allows for the scaling of the content of the index field 1654 for memory address generation (e.g., for address generation that uses 2^{scale} * index + base).

Some addressing forms utilize a displacement value to generate a memory address. For example, a memory address may be generated according to 2^{scale} * index + base + displacement, index*scale + displacement, r/m + displacement, instruction pointer (RIP/EIP) + displacement, register + displacement, etc. The displacement may be a 1-byte, 2-byte, 4-byte, etc. value. In some examples, the displacement field 1507 provides this value. Additionally, in some examples, a displacement factor usage is encoded in the MOD field of the addressing information field 1505 that indicates a compressed displacement scheme for which a displacement value is calculated and stored in the displacement field 1507.

In some examples, the immediate value field 1509 specifies an immediate value for the instruction. An immediate value may be encoded as a 1-byte value, a 2-byte value, a 4-byte value, etc.

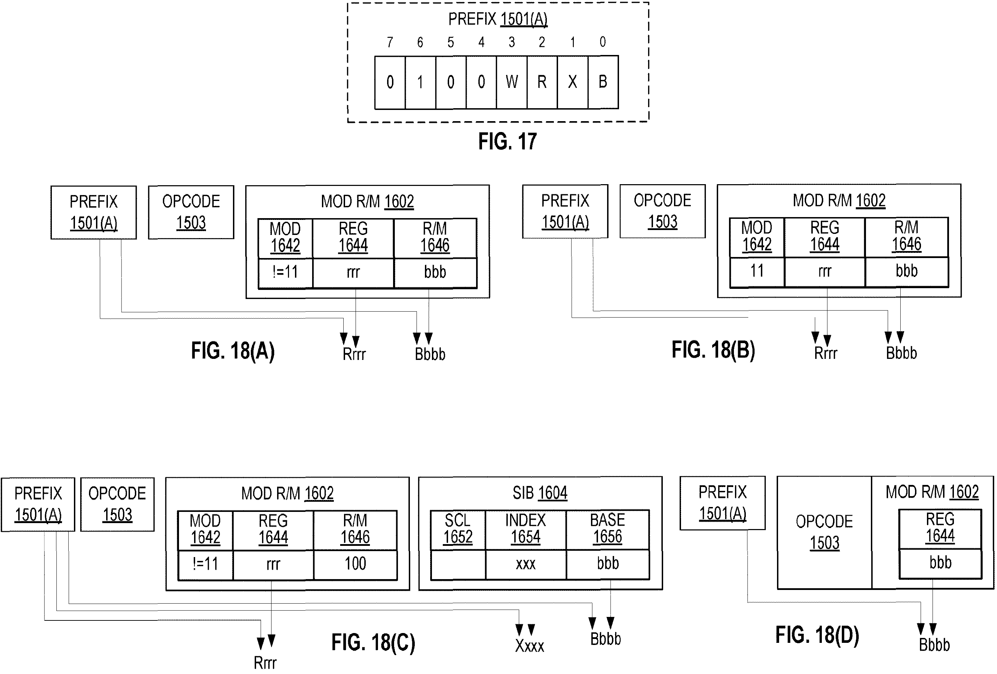

**FIG. 17** illustrates examples of a first prefix 1501(A). In some examples, the first prefix 1501(A) is an example of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 1501(A) may specify up to three registers using 3-bit fields depending on the format: 1) using the reg field 1644 and the R/M field 1646 of the MOD R/M byte 1602; 2) using the MOD R/M byte 1602 with the SIB byte 1604 including using the reg field 1644 and the base field 1656 and index field 1654; or 3) using the register field of an opcode.

In the first prefix 1501(A), bit positions 7:4 are set as 0100. Bit position 3 (W) can be used to determine the operand size but may not solely determine operand width. As such, when W = 0, the operand size is determined by a code segment descriptor (CS.D) and when W = 1, the operand size is 64-bit.

Note that the addition of another bit allows for 16 (2⁴) registers to be addressed, whereas the MOD R/M reg field 1644 and MOD R/M R/M field 1646 alone can each only address 8 registers.

In the first prefix 1501(A), bit position 2 (R) may be an extension of the MOD R/M reg field 1644 and may be used to modify the MOD R/M reg field 1644 when that field encodes a general-purpose register, a 64-bit packed data register (e.g., a SSE register), or a control or debug register. R is ignored when MOD R/M byte 1602 specifies other registers or defines an extended opcode.

Bit position 1 (X) may modify the SIB byte index field 1654.

Bit position 0 (B) may modify the base in the MOD R/M R/M field 1646 or the SIB byte base field 1656; or it may modify the opcode register field used for accessing general purpose registers (e.g., general purpose registers 1425).

**FIGS. 18(A)****-(D)** illustrate examples of how the R, X, and B fields of the first prefix 1501(A) are used. **FIG. 18(A)** illustrates R and B from the first prefix 1501(A) being used to extend the reg field 1644 and R/M field 1646 of the MOD R/M byte 1602 when the SIB byte 16 04 is not used for memory addressing. **FIG. 18(B)** illustrates R and B from the first prefix 1501(A) being used to extend the reg field 1644 and R/M field 1646 of the MOD R/M byte 1602 when the SIB byte 16 04 is not used (register-register addressing). **FIG. 18(C)** illustrates R, X, and B from the first prefix 1501(A) being used to extend the reg field 1644 of the MOD R/M byte 1602 and the index field 1654 and base field 1656 when the SIB byte 16 04 being used for memory addressing. **FIG. 18(D)** illustrates B from the first prefix 1501(A) being used to extend the reg field 1644 of the MOD R/M byte 1602 when a register is encoded in the opcode 1503.

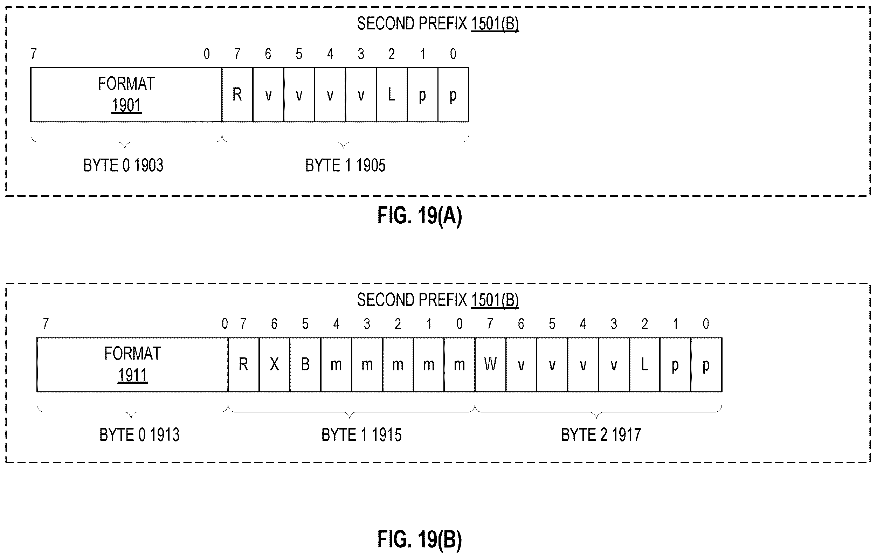

**FIGS. 19(A)****-(B)** illustrate examples of a second prefix 1501(B). In some examples, the second prefix 1501(B) is an example of a VEX prefix. The second prefix 1501(B) encoding allows instructions to have more than two operands, and allows SIMD vector registers (e.g., vector/SIMD registers 1410) to be longer than 64-bits (e.g., 128-bit and 256-bit). The use of the second prefix 1501(B) provides for three-operand (or more) syntax. For example, previous two-operand instructions performed operations such as A = A + B, which overwrites a source operand. The use of the second prefix 1501(B) enables operands to perform nondestructive operations such as A = B + C.

In some examples, the second prefix 1501(B) comes in two forms - a two-byte form and a three-byte form. The two-byte second prefix 1501(B) is used mainly for 128-bit, scalar, and some 256-bit instructions; while the three-byte second prefix 1501(B) provides a compact replacement of the first prefix 1501(A) and 3-byte opcode instructions.

**FIG. 19(A)** illustrates examples of a two-byte form of the second prefix 1501(B). In one example, a format field 1901 (byte 0 1903) contains the value C5H. In one example, byte 1 1905 includes an "R" value in bit[7]. This value is the complement of the "R" value of the first prefix 1501(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 1646 to encode the instruction operand that references a memory address or encode either the destination register operand or a source register operand.

Instructions that use this prefix may use the MOD R/M reg field 1644 to encode either the destination register operand or a source register operand, or to be treated as an opcode extension and not used to encode any instruction operand.

For instruction syntax that supports four operands, vvvv, the MOD R/M R/M field 1646 and the MOD R/M reg field 1644 encode three of the four operands. Bits[7:4] of the immediate value field 1509 are then used to encode the third source register operand.

**FIG. 19(B)** illustrates examples of a three-byte form of the second prefix 1501(B). In one example, a format field 1911 (byte 0 1913) contains the value C4H. Byte 1 1915 includes in bits[7:5] "R," "X," and "B" which are the complements of the same values of the first prefix 1501(A). Bits[4:0] of byte 1 1915 (shown as mmmmm) include content to encode, as need, one or more implied leading opcode bytes. For example, 00001 implies a 0FH leading opcode, 00010 implies a 0F38H leading opcode, 00011 implies a 0F3AH leading opcode, etc.

Bit[7] of byte 2 1917 is used like W of the first prefix 1501(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 1646 to encode the instruction operand that references a memory address or encode either the destination register operand or a source register operand.

Instructions that use this prefix may use the MOD R/M reg field 1644 to encode either the destination register operand or a source register operand, or to be treated as an opcode extension and not used to encode any instruction operand.

For instruction syntax that supports four operands, vvvv, the MOD R/M R/M field 1646, and the MOD R/M reg field 1644 encode three of the four operands. Bits[7:4] of the immediate value field 1509 are then used to encode the third source register operand.

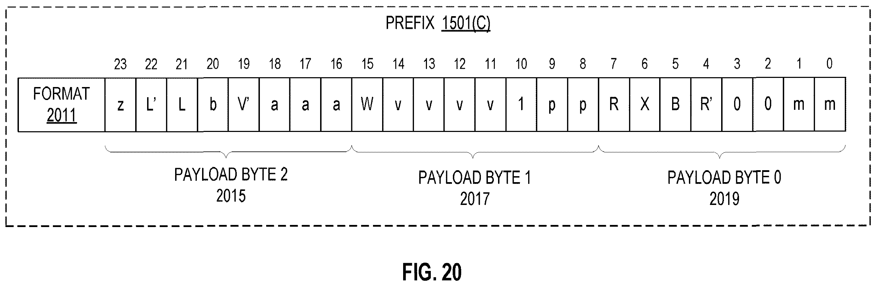

**FIG. 20** illustrates examples of a third prefix 1501(C). In some examples, the third prefix 1501(C) is an example of an EVEX prefix. The third prefix 1501(C) is a four-byte prefix.

The third prefix 1501(C) can encode 32 vector registers (e.g., 128-bit, 256-bit, and 512-bit registers) in 64-bit mode. In some examples, instructions that utilize a writemask/opmask (see discussion of registers in a previous figure, such as **FIG. 14****)** or predication utilize this prefix. Opmask register allows for conditional processing or selection control. Opmask instructions, whose source/destination operands are opmask registers and treat the content of an opmask register as a single value, are encoded using the second prefix 1501(B).

The third prefix 1501(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 1501(C) is a format field 2011 that has a value, in one example, of 62H. Subsequent bytes are referred to as payload bytes 2015-2019 and collectively form a 24-bit value of P[23:0] providing specific capability in the form of one or more fields (detailed herein).

In some examples, P[1:0] of payload byte 2019 are identical to the low two mm bits. P[3:2] are reserved in some examples. Bit P[4] (R') allows access to the high 16 vector register set when combined with P[7] and the MOD R/M reg field 1644. P[6] can also provide access to a high 16 vector register when SIB-type addressing is not needed. P[7:5] consist of R, X, and B which are operand specifier modifier bits for vector register, general purpose register, memory addressing and allow access to the next set of 8 registers beyond the low 8 registers when combined with the MOD R/M register field 1644 and MOD R/M R/M field 1646. P[9:8] provides opcode extensionality equivalent to some legacy prefixes (e.g., 00 = no prefix, 01 = 66H, 10 = F3H, and 11 = F2H). P[10] in some examples is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is like W of the first prefix 1501(A) and second prefix 1511(B) and may serve as an opcode extension bit or operand size promotion.

P[18:16] specify the index of a register in the opmask (writemask) registers (e.g., writemask/predicate registers 1415). In one example, the specific value aaa = 000 has a special behavior implying no opmask is used for the particular instruction (this may be implemented in a variety of ways including the use of an opmask hardwired to all ones or hardware that bypasses the masking hardware). When merging, vector masks allow any set of elements in the destination to be protected from updates during the execution of any operation (specified by the base operation and the augmentation operation); in other one example, preserving the old value of each element of the destination where the corresponding mask bit has a 0. In contrast, when zeroing vector masks allow any set of elements in the destination to be zeroed during the execution of any operation (specified by the base operation and the augmentation operation); in one example, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While examples are described in which the opmask field's content selects one of a number of opmask registers that contains the opmask to be used (and thus the opmask field's content indirectly identifies that masking to be performed), alternative examples instead or additional allow the mask write field's content to directly specify the masking to be performed.

P[19] can be combined with P[14:11] to encode a second source vector register in a non-destructive source syntax which can access an upper 16 vector registers using P[19]. P[20] encodes multiple functionalities, which differ across different classes of instructions and can affect the meaning of the vector length/ rounding control specifier field (P[22:21]). P[23] indicates support for merging-writemasking (e.g., when set to 0) or support for zeroing and merging-writemasking (e.g., when set to 1).

Example examples of encoding of registers in instructions using the third prefix 1501(C) are detailed in the following tables.

**Table 1: 32-Register Support in 64-bit Mode**

| | 4 | 3 | [2:0] | REG. TYPE | COMMON USAGES |
|---|---|---|---|---|---|
| REG | R' | R | MOD R/M reg | GPR, Vector | Destination or Source |
| VVVV | V' | vvvv | | GPR, Vector | 2nd Source or Destination |
| RM | X | B | MOD R/M R/M | GPR, Vector | 1st Source or Destination |
| BASE | 0 | B | MOD R/M R/M | GPR | Memory addressing |
| INDEX | 0 | X | SIB.index | GPR | Memory addressing |
| VIDX | V' | X | SIB.index | Vector | VSIB memory addressing |

**Table 2: Encoding Register Specifiers in 32-bit Mode**

| | [2:0] | REG. TYPE | COMMON USAGES |
|---|---|---|---|
| REG | MOD R/M reg | GPR, Vector | Destination or Source |
| VVVV | vvvv | GPR, Vector | 2^{nd} Source or Destination |
| RM | MOD R/M R/M | GPR, Vector | 1^{st} Source or Destination |
| BASE | MOD R/M R/M | GPR | Memory addressing |
| INDEX | SIB.index | GPR | Memory addressing |
| VIDX | SIB.index | Vector | VSIB memory addressing |

**Table 3: Opmask Register Specifier Encoding**

| | [2:0] | REG. TYPE | COMMON USAGES |
|---|---|---|---|
| REG | MOD R/M Reg | k0-k7 | Source |
| VVVV | vvvv | k0-k7 | 2^{nd} Source |
| RM | MOD R/M R/M | k0-k7 | 1^{st} Source |
| {k1} | aaa | k0-k7 | Opmask |

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

One or more aspects of at least one example may be implemented by representative instructions stored on a machine-readable medium which represents various logic within the processor, which when read by a machine causes the machine to fabricate logic to perform the techniques described herein. Such representations, known as "intellectual property (IP) cores" may be stored on a tangible, machine readable medium and supplied to various customers or manufacturing facilities to load into the fabrication machines that make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors, and/or system features described herein. Such examples may also be referred to as program products.

### Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

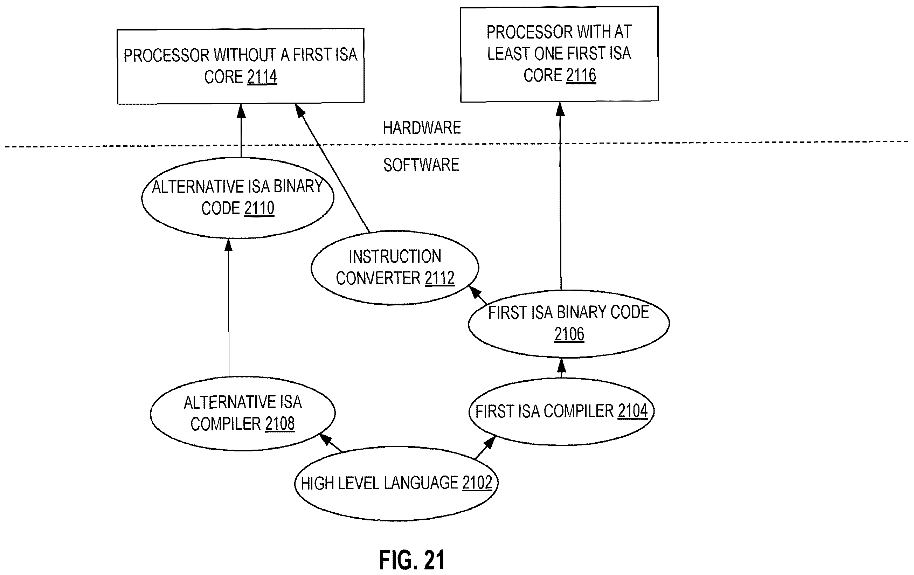

**FIG. 21** is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. **FIG. 21** shows a program in a high-level language 2102 may be compiled using a first ISA compiler 2104 to generate first ISA binary code 2106 that may be natively executed by a processor with at least one first ISA core 2116. The processor with at least one first ISA core 2116 represents any processor that can perform substantially the same functions as an Intel^{®} processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 2104 represents a compiler that is operable to generate the first ISA binary code 2106 (e.g., object code) that can, with or without additional linkage processing, be executed on the processor with at least one first ISA core 2116. Similarly, **FIG. 21** shows the program in the high-level language 2102 may be compiled using an alternative ISA compiler 2108 to generate alternative ISA binary code 2110 that may be natively executed by a processor without a first ISA core 2114. The instruction converter 2112 is used to convert the first ISA binary code 2106 into code that may be natively executed by the processor without a first ISA core 2114. This converted code is not necessarily to be the same as the alternative ISA binary code 2110; however, the converted code will accomplish the general operation and be made up of instructions from the alternative ISA. Thus, the instruction converter 2112 represents software, firmware, hardware, or a combination thereof that, through emulation, simulation, or any other process, allows a processor or other electronic device that does not have a first ISA processor or core to execute the first ISA binary code 2106.

Components, features, and details described for any of FIGS. 3-7 may also optionally apply to any of FIGS. 1-2. Components, features, and details described for any of the processors disclosed herein may optionally apply to any of the methods disclosed herein, which in embodiments may optionally be performed by and/or with such processors. Any of the processors described herein in embodiments may optionally be included in any of the systems disclosed herein. Any of the processors disclosed herein may optionally have any of the microarchitectures shown herein.

References to "one example," "an example," etc., indicate that the example described may include a particular feature, structure, or characteristic, but every example may not necessarily include the particular feature, structure, or characteristic. Moreover, such phrases do not necessarily refer to the same example. Further, when a particular feature, structure, or characteristic is described in connection with an example, it is submitted that it is within the knowledge of one skilled in the art to affect such feature, structure, or characteristic in connection with other examples whether explicitly described.

Processor components disclosed herein may be said and/or claimed to be operative, operable, capable, able, configured adapted, or otherwise to perform an operation. For example, a decoder may be said and/or claimed to decode an instruction, an execution unit may be said and/or claimed to store a result, or the like. As used herein, these expressions refer to the characteristics, properties, or attributes of the components when in a powered-off state, and do not imply that the components or the device or apparatus in which they are included is currently powered on or operating. For clarity, it is to be understood that the processors and apparatus claimed herein are not claimed as being powered on or running.

In the description and claims, the terms "coupled" and/or "connected," along with their derivatives, may have been used. These terms are not intended as synonyms for each other. Rather, in embodiments, "connected" may be used to indicate that two or more elements are in direct physical and/or electrical contact with each other. "Coupled" may mean that two or more elements are in direct physical and/or electrical contact with each other. However, "coupled" may also mean that two or more elements are not in direct contact with each other, yet still co-operate or interact with each other. For example, an execution unit may be coupled with a register and/or a decode unit through one or more intervening components. In the figures, arrows are used to show connections and couplings.

Some embodiments include an article of manufacture (e.g., a computer program product) that includes a machine-readable medium. The medium may include a mechanism that provides, for example stores, information in a form that is readable by the machine. The machine-readable medium may provide, or have stored thereon, an instruction or sequence of instructions, that if and/or when executed by a machine are operative to cause the machine to perform and/or result in the machine performing one or operations, methods, or techniques disclosed herein.

In some embodiments, the machine-readable medium may include a tangible and/or non-transitory machine-readable storage medium. For example, the non-transitory machine-readable storage medium may include a floppy diskette, an optical storage medium, an optical disk, an optical data storage device, a CD-ROM, a magnetic disk, a magneto-optical disk, a read only memory (ROM), a programmable ROM (PROM), an erasable-and-programmable ROM (EPROM), an electrically-erasable-and-programmable ROM (EEPROM), a random access memory (RAM), a static-RAM (SRAM), a dynamic-RAM (DRAM), a Flash memory, a phase-change memory, a phase-change data storage material, a non-volatile memory, a non-volatile data storage device, a non-transitory memory, a non-transitory data storage device, or the like. The non-transitory machine-readable storage medium does not consist of a transitory propagated signal. In some embodiments, the storage medium may include a tangible medium that includes solid-state matter or material, such as, for example, a semiconductor material, a phase change material, a magnetic solid material, a solid data storage material, etc. Alternatively, a non-tangible transitory computer-readable transmission media, such as, for example, an electrical, optical, acoustical, or other form of propagated signals - such as carrier waves, infrared signals, and digital signals, may optionally be used.

Examples of suitable machines include, but are not limited to, a general-purpose processor, a special-purpose processor, a digital logic circuit, an integrated circuit, or the like. Still other examples of suitable machines include a computer system or other electronic device that includes a processor, a digital logic circuit, or an integrated circuit. Examples of such computer systems or electronic devices include, but are not limited to, desktop computers, laptop computers, notebook computers, tablet computers, netbooks, smartphones, cellular phones, servers, network devices (e.g., routers and switches.), Mobile Internet devices (MIDs), media players, smart televisions, nettops, set-top boxes, and video game controllers.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e. A and B, A and C, B and C, and A, B and C).

In the description above, specific details have been set forth to provide a thorough understanding of the embodiments. However, other embodiments may be practiced without some of these specific details. Various modifications and changes may be made thereunto without departing from the broader spirit and scope of the disclosure as set forth in the claims. The specification and drawings are, accordingly, to be regarded in an illustrative rather than a restrictive sense. The scope of the invention is not to be determined by the specific examples provided above, but only by the claims below. In other instances, well-known circuits, structures, devices, and operations have been shown in block diagram form and/or without detail to avoid obscuring the understanding of the description.

### EXAMPLE EMBODIMENTS

The following examples pertain to further embodiments. Specifics in the examples may be used anywhere in one or more embodiments.

Example 1 is a processor or other apparatus including a cache to store cache lines and a circuitry coupled with the cache. The circuitry is to receive a memory access request for data at a memory address from a first security domain. The data at the memory address is to be shared by a plurality of security domains including the first security domain. A side-channel protection is to be used for the data. The circuitry is also to be used implement the side-channel protection for the data. This includes not providing a cache line corresponding to the memory address from the cache to the first security domain, when the cache line exists in the cache and is valid, if the first security domain has not previously accessed the cache line in the cache.

Example 2 includes the apparatus of Example 1, where, the circuitry, to implement the side-channel protection for the data, includes to load a copy of the cache line corresponding to the memory address from a higher-level cache or memory, and provide the cache line to the first security domain after loading the copy of the cache line, when the cache line exists in the cache and is valid, if the first security domain has not previously accessed the cache line in the cache.

Example 3 includes the apparatus of Example 2, where, the circuitry, to implement the side-channel protection for the data, includes to update metadata corresponding to the cache line and corresponding to the first security domain to indicate that the first security domain, in loading the copy of the cache line, has now accessed the cache line in the cache.

Example 4 includes the apparatus of any one of Examples 2 to 3, where, to implement the side-channel protection for the data, includes to evict a second cache line from the cache in conjunction with the load of the copy of the cache line, even though the cache line exists in the cache and is valid.

Example 5 includes the apparatus of any one of Examples 1 to 4, where, to implement the side-channel protection for the data, includes to provide the cache line corresponding to the memory address from the cache to the first security domain, when the cache line exists in the cache and is valid, if the first security domain has previously accessed the cache line in the cache.

Example 6 includes the apparatus of any one of Examples 1 to 5, where the circuitry is to receive a second memory access request for second data at a second memory address from the first security domain. The side-channel protection is not to be used for the second data at the second memory address (e.g., it is not for a second cache line shared by security domains). The circuitry is to provide a second cache line corresponding to the second memory address from the cache to the first security domain, when the second cache line exists in the cache and is valid, if none of the plurality of security domains have previously accessed the second cache line in the cache. Or, the circuitry is not to provide the second cache line corresponding to the second memory address from the cache to the first security domain, when the second cache line exists in the cache and is valid, if any of the plurality of security domains have previously accessed the second cache line in the cache.

Example 7 includes the apparatus of Example 6, where the circuitry, if said any of the plurality of security domains have previously accessed the second cache line in the cache, is to load a copy of the second cache line from a higher-level cache or memory, and provide the second cache line to the first security domain, when the second cache line exists in the cache and is valid, and update metadata corresponding to the second cache line to indicate that none of the security domains have previously accessed the second cache line.

Example 8 includes the apparatus of any one of Examples 1 to 7, where the cache has a field corresponding to the cache line to store an indication whether the first security domain has accessed the cache line in the cache.

Example 9 includes the apparatus of any one of Examples 1 to 8, where the memory access request includes an identifier of the first security domain and an indication that the side-channel protection is to be used for the data at the memory address.

Example 10 includes the apparatus of any one of Examples 1 to 9, where the circuitry is a cache controller or a snoop filter.

Example 11 includes the apparatus of any one of Examples 1 to 10, further including a control and/or configuration register, where, when the first security domain is active to execute instructions, the control and/or configuration register is to store an identifier of the first security domain.

Example 12 includes the apparatus of any one of Examples 1 to 11, further including a translation lookaside buffer (TLB) to store a plurality of entries, including an entry corresponding to the memory address, where the entry is to store an indication that the side-channel protection is to be used for the data.

Example 13 includes the apparatus of any one of Examples 1 to 12, further including address translation logic to perform an address translation based on the memory address, including to determine from a page table, which is used to translate guest physical addresses to host physical addresses, that the side-channel protection is to be used for the data.

Example 14 includes the apparatus of any one of Examples 1 to 13, further including a decode unit to decode a cache line flush instruction from the first security domain. The cache line flush instruction indicating a second memory address. The second data at the second memory address is to be shared by the plurality of security domains. A side-channel protection is to be used for the second data. The apparatus also includes an execution unit coupled with the decode unit. The execution unit is to perform operations corresponding to the cache line flush instruction. The operations include to update a field of the cache corresponding to the second cache line and corresponding to the first security domain to indicate that the first security domain has not accessed the second cache line in the cache, when the first security domain had previously accessed the second cache line in the cache. The operations include to flush the second cache line from the cache if a plurality of fields corresponding to the second cache line and each corresponding to a different one of the plurality of security domains indicate that none of the plurality of security domains have previously accessed the second cache line in the cache. Or else the operations include to not flush the second cache line from the cache if the plurality of fields indicate that at least one of the plurality of security domains has previously accessed the second cache line in the cache.

Example 15 is a method (e.g., performed by a processor). The method includes receiving a memory access request for data at a memory address from a first security domain. The data at the memory address is to be shared by a plurality of security domains including the first security domain. A side-channel protection is to be used for the data. The method also includes implementing the side-channel protection for the data, including not providing a cache line corresponding to the memory address from a cache to the first security domain, when the cache line exists in the cache and is valid, if the first security domain has not accessed the cache line in the cache.

Example 16 includes the method of Example 15, where, to implement the side-channel protection for the data, includes to load a copy of the cache line corresponding to the memory address from a higher-level cache or memory, and provide the cache line to the first security domain after loading the copy of the cache line, when the cache line exists in the cache and is valid, if the first security domain has not previously accessed the cache line in the cache.

Example 17 includes the method of any one of Examples 15 to 16, where, to implement the side-channel protection for the data, includes to provide the cache line corresponding to the memory address from the cache to the first security domain, when the cache line exists in the cache and is valid, if the first security domain has previously accessed the cache line in the cache.

Example 18 is a memory, hard disc, CD ROM, or other non-transitory machine-readable storage medium, the non-transitory machine-readable storage medium storing instructions of a virtual machine monitor (VMM) that, if executed by a machine, are to cause the machine to perform operations. The operations include to specify in address translation page tables that a side-channel protection is to be used for pages to be shared by a plurality of security domains. The operations also include to assign distinct security domain identifiers to the plurality of security domains. The operations also include to start a security domain of the plurality of security domains, including to store a security domain identifier corresponding to the security domain in a control and/or configuration register. The operations also include to tear down the security domain, including to remove the security domain identifier from the control and/or configuration register, and update the address translation page tables to indicate that the pages are not to be shared by the security domain.

Example 19 includes the non-transitory machine-readable storage medium of Example 18, storing instructions of the VMM that, if executed by the machine, are to cause the machine to flush cache lines of the pages from caches with the security domain identifier in conjunction with the tear down of the security domain.

Example 20 includes the non-transitory machine-readable storage medium of any one of Examples 18 to 19, where the security domain is one of a virtual machine, a protected virtual machine, a trusted execution environment, a trust domain, and a realm.

Example 21 is a processor or other apparatus operative to perform the method of any one of Examples 15 to 17.

Example 22 is a processor or other apparatus that includes means for performing the method of any one of Examples 15 to 17.

Example 23 is a processor or other apparatus that includes any combination of modules and/or units and/or logic and/or circuitry and/or means operative to perform the method of any one of Examples 15 to 17.

## Claims

1. An apparatus comprising:
a cache to store cache lines; and
a circuitry coupled with the cache, the circuitry to:
receive a memory access request for data at a memory address from a first security domain, wherein the data at the memory address is to be shared by a plurality of security domains including the first security domain, and wherein a side-channel protection is to be used for the data; and
implement the side-channel protection for the data, including to not provide a cache line corresponding to the memory address from the cache to the first security domain, when the cache line exists in the cache and is valid, if the first security domain has not previously accessed the cache line in the cache.

2. The apparatus of claim 1, wherein, the circuitry, to implement the side-channel protection for the data, includes to load a copy of the cache line corresponding to the memory address from a higher-level cache or memory, and provide the cache line to the first security domain after loading the copy of the cache line, when the cache line exists in the cache and is valid, if the first security domain has not previously accessed the cache line in the cache.

3. The apparatus of claim 2, wherein, the circuitry, to implement the side-channel protection for the data, includes to update metadata corresponding to the cache line and corresponding to the first security domain to indicate that the first security domain, in loading the copy of the cache line, has now accessed the cache line in the cache.

4. The apparatus of claim 2 or 3, wherein, to implement the side-channel protection for the data, includes to evict a second cache line from the cache in conjunction with the load of the copy of the cache line, even though the cache line exists in the cache and is valid.

5. The apparatus of any one of claims 1 to 4, wherein, to implement the side-channel protection for the data, includes to provide the cache line corresponding to the memory address from the cache to the first security domain, when the cache line exists in the cache and is valid, if the first security domain has previously accessed the cache line in the cache.

6. The apparatus of any one of claims 1 to 5, wherein the circuitry is to:
receive a second memory access request for second data at a second memory address from the first security domain, wherein the side-channel protection is not to be used for the second data at the second memory address; and
provide a second cache line corresponding to the second memory address from the cache to the first security domain, when the second cache line exists in the cache and is valid, if none of the plurality of security domains have previously accessed the second cache line in the cache; or
not provide the second cache line corresponding to the second memory address from the cache to the first security domain, when the second cache line exists in the cache and is valid, if any of the plurality of security domains have previously accessed the second cache line in the cache.

7. The apparatus of claim 6, wherein the circuitry, if said any of the plurality of security domains have previously accessed the second cache line in the cache, is to:
load a copy of the second cache line from a higher-level cache or memory, and provide the second cache line to the first security domain, when the second cache line exists in the cache and is valid; and
update metadata corresponding to the second cache line to indicate that none of the security domains have previously accessed the second cache line.

8. The apparatus of any one of claims 1 to 7, wherein the cache has a field corresponding to the cache line to store an indication whether the first security domain has accessed the cache line in the cache, and wherein the memory access request includes an identifier of the first security domain and an indication that the side-channel protection is to be used for the data at the memory address.

9. The apparatus of any one of claims 1 to 8, further comprising:
a decode unit to decode a cache line flush instruction from the first security domain, the cache line flush instruction indicating a second memory address, wherein second data at the second memory address is to be shared by the plurality of security domains, and wherein a side-channel protection is to be used for the second data; and
an execution unit coupled with the decode unit, the execution unit to perform operations corresponding to the cache line flush instruction, including to:
update a field of the cache corresponding to the second cache line and corresponding to the first security domain to indicate that the first security domain has not accessed the second cache line in the cache, when the first security domain had previously accessed the second cache line in the cache; and
flush the second cache line from the cache if a plurality of fields corresponding to the second cache line and each corresponding to a different one of the plurality of security domains indicate that none of the plurality of security domains have previously accessed the second cache line in the cache; or
not flush the second cache line from the cache if the plurality of fields indicate that at least one of the plurality of security domains has previously accessed the second cache line in the cache.

10. A method comprising:
receiving a memory access request for data at a memory address from a first security domain, wherein the data at the memory address is to be shared by a plurality of security domains including the first security domain, and wherein a side-channel protection is to be used for the data; and
implementing the side-channel protection for the data, including not providing a cache line corresponding to the memory address from a cache to the first security domain, when the cache line exists in the cache and is valid, if the first security domain has not accessed the cache line in the cache.

11. The method of claim 10, wherein, to implement the side-channel protection for the data, includes to load a copy of the cache line corresponding to the memory address from a higher-level cache or memory, and provide the cache line to the first security domain after loading the copy of the cache line, when the cache line exists in the cache and is valid, if the first security domain has not previously accessed the cache line in the cache.

12. The method of claim 10 or 11, wherein, to implement the side-channel protection for the data, includes to provide the cache line corresponding to the memory address from the cache to the first security domain, when the cache line exists in the cache and is valid, if the first security domain has previously accessed the cache line in the cache.

13. A machine-readable storage medium, the non-transitory machine-readable storage medium storing instructions of a virtual machine monitor (VMM) that, if executed by a machine, are to cause the machine to perform operations, the operations including to:
specify in address translation page tables that a side-channel protection is to be used for pages to be shared by a plurality of security domains;
assign distinct security domain identifiers to the plurality of security domains;
start a security domain of the plurality of security domains, including to store a security domain identifier corresponding to the security domain in a control and/or configuration register; and
tear down the security domain, including to remove the security domain identifier from the control and/or configuration register, and update the address translation page tables to indicate that the pages are not to be shared by the security domain.

14. The machine-readable storage medium of claim 13, storing instructions of the VMM that, if executed by the machine, are to cause the machine to flush cache lines of the pages from caches with the security domain identifier in conjunction with the tear down of the security domain, and wherein the security domain is one of a virtual machine, a protected virtual machine, a trusted execution environment, a trust domain, and a realm.

15. A machine-readable storage medium having a computer program product, comprising instructions which, when executed by one or more machines, cause the one or more machines to perform the method of any one of claims 10 to 12.
